# EUROPÄISCHE PATENTSCHRIFT

(11) **EP 1 679 808 B1**
(45) Veröffentlichungstag und Bekanntmachung des Hinweises auf die Patenterteilung: **02.04.2008**
(21) Anmeldenummer: 06000049.4
(22) Anmeldetag: 03.01.2006
(51) Int. Cl.: H04B 10/10

(54) **System zur bidirektionalen optischen Vollduplex-Freiraum-Datenübertragung**
System for a bi-directional full-duplex data transmission in optical free space
Système pour la transmission bidirectionnelle optique en espace libre de données en duplex intégral

(30) Priorität: 07.01.2005 DE 102005000937
(43) Veröffentlichungstag der Anmeldung: 12.07.2006
(73) Patentinhaber: Deutsches Zentrum für Luft- und Raumfahrt e.V., 51147 Köln (DE)
(72) Erfinder: Henniger, Hennes, 82211 Herrsching (DE); Giggenbach, Dirk, Dr, 86932 Pürgen (DE)
(74) Vertreter: von Kirschbaum, Albrecht

(56) Entgegenhaltungen:
- WO-A-02/095989
- US-A1- 2003 215 176
- US-A1- 2004 208 595

## Beschreibung

Die vorliegende Erfindung betrifft ein System zur bidirektionalen optischen Vollduplex-Freiraum-Datenübertragung zwischen oder von mobilen, arbiträr vernetzbaren Kommunikationspartnern, die jeweils ein in einem Gehäuse untergebrachtes Terminal aufweisen, das für den Sende- und Empfangssignalweg mit einer gemeinsamen Teleskop-Apertur und mit einer Einrichtung zur Ausrichtungseinstellung versehen ist und bei dem die Trägerwellenlänge des Sendesignals gegenüber der Trägerwellenlänge des Empfangssignals unterschiedlich gewählt ist.

Die Erfindung soll die Realisierung von optischen Richtfunkstrecken, d.h. optischen Freistrahl-Kommunikationsverbindungen, zur hochratigen Kommunikation zwischen Flugzeugen ziviler oder militärischer Art oder aller anderen Arten von mobilen Kommunikationspartnern, wie z.B. Landfahrzeuge, Luftfahrzeuge, Schiffe, Satelliten, Raumsonden, ermöglichen. Diese mobilen optischen Kommunikationsverbindungen (englisch "Mobile Free-space Optics"; MFSO) sollen zukünftig breitbandige Kommunikation von bzw. zwischen (Luft-) Fahrzeugen ermöglichen. Im Unterschied zu optischen Inter-Satelliten-Links müssen bei avionischen optischen Kommunikationsverbindungen auf Grund der starken Vibrationen und atmosphärischer Kohärenzstörungen größere Signal-Divergenzwinkel und Empfangswinkel als beugungsbegrenzt möglich verwendet werden. Damit einher geht eine technisch unvermeidliche Verringerung der Übertragungseffizienz.

Zur Zeit wird Kommunikation mit mobilen Partnern üblicherweise mittels Funkübertragungsstrecken abgewickelt, also unter Verwendung von Radiowellen mit typischen Frequenzen zwischen wenigen MHz und einigen GHz. Eine solche Funkübertragung weist aber Bandbreitenbeschränkungen auf, da das Funkwellenspektrum begrenzt und seine Nutzung reglementiert ist. Auch kommt es zu Interferenzen zwischen verschiedenen Sendern und zu hohem Sendeleistungsverbrauch, wenn sehr hohe Datenraten, z.B. einige Gbps, über große Strecken übertragen werden sollen.

Optische Richtfunkstrecken dagegen erlauben dank ihrer extrem hohen Trägerfrequenz, z.B. einige hundert THz bei Laser-Quellen im nahen Infrarot, eine Konzentration der Signalleistung auf einen sehr kleinen Bereich um den den Kommunikationspartner bildenden Empfänger. Das Datensignal kann dabei durch verschiedene Modulationsarten auf den optischen Träger moduliert sein. In erster Linie wird hier die einfache Intensitätsmodulation (On-off-keying; OOK) oder die Pulsphasenmodulation (Pulse Position Modulation; PPM) angewandt.

Voraussetzung für die Verwendung einer optischen Richtfunkstrecke ist lediglich eine dämpfungsarme Verbindung. Die Dämpfung wird im wesentlichen durch Nebel, Wolken, Staub und Dunst in der Atmosphäre bestimmt, wobei die Wolken in avionischen Verbindungen den größten Einfluss haben. Aufgrund der Schichtung der Atmosphäre ist die vertikale Ausdehnung von Wolken begrenzt, so dass oberhalb gewisser Flug-Höhen eine wolkenfreie Sichtverbindung garantiert werden kann.

Die notwendig scharfe Bündelung des Sendesignalstrahls erfordert allerdings eine präzise Regelung dieses Strahls (PAT; Pointing, Acquisition, and Tracking; Strahlausrichtung,
- einfangen und -verfolgung). Strahldivergenzwinkel im Bereich weniger tausendstel Grad sind hier typisch. Hiervon betroffen sind zunächst das Auffinden des Kommunikationspartners, dann die Regelung der Richtung des ausgehenden Sendesignalstrahles und auch das Verfolgen des Empfangsstrahles, also quasi die Blickrichtung. Insbesondere bei avionischen Trägerplattformen erfordern die störenden Beeinflussungen infolge von Vibrationen durch Antriebsaggregate, von Schwankungen auf Grund von Luftturbulenzen und von Brechungsindex-Turbulenzen auf Grund atmosphärischer Effekte eine sehr robuste und schnelle Strahlregelung.

Angesichts dieser starken Richtungsstörungen wird bei Kommunikationsterminals an Bord avionischer Trägerplattformen der Divergenzwinkel absichtlich etwas größer eingestellt, als er theoretisch auf Grund der Aperturgrößen sein könnte. Dadurch verringern sich die PAT-Anforderungen etwas. Die Teleskop-Aperturfläche wird hierbei nur für den Empfang des vom Kommunikationspartner kommenden Signals voll ausgenutzt. Zum Senden wird lediglich ein Teil der vollen Teleskop-Aperturfläche genutzt. Dieses Vorgehen erlaubt das einfache Einkoppeln des Sendesignals in den Empfangspfad, ohne dass es zu starken Abschattungsverlusten kommt. Eine volle Ausnutzung der Teleskop-Aperturfläche für den Sendestrahl erfordert kompliziertere Formen der Einkopplung des Sendesignals in den Empfangspfad. Hierzu wären nach dem gegenwärtigen Stand der Technik hochpräzise und empfindliche optische Aufbauten erforderlich, deren optimale Qualität bei den starken und langzeitigen Belastungen im jahrelangen Einsatz eines Flugzeugs oft nicht gewährleistet werden kann.

Ein Nachteil bei mobilen optischen Kommunikationsverbindungen ist das Überstrahlen des Empfänger-Pfades durch das eigene Sendelicht bzw. das eigene Beacon-Signal. Da aus Platzersparnisgründen für Empfangs- und Sendestrahl die gleichen optischen Pfade genutzt werden, wird das Sendelicht durch teilweise den gleichen Strahlengang im Teleskop geführt wie das empfangene Licht, und es kommt an optischen Oberflächen, also Spiegeln und Linsen, sowie an Hindernissen in der Atmosphäre, also beispielsweise Aerosolen, Wassertröpfchen oder vorbeifliegenden Vögeln, unvermeidlich zu einer Rückstreuung eines kleinen Anteils des Sendelichtes oder auch eines eventuell gleichzeitig abgestrahlten Beacon-Lichtsignals. Da das Empfangssignal nach der langen Übertragungsstrecke sehr schwach ist, kann es sein, dass das rückgestreute Sendesignal stärker ist als das eigentlich zu detektierende Empfangssignal. Ein einwandfrei detektierbarer Signalempfang ist damit nicht mehr möglich, da es zur Blendung der meist über einen breiten Wellenlängenbereich relativ empfindlichen Detektoren durch das eigene ausgestrahlte Sendelicht kommt.

Besonders nachteilig wirkt sich die teilweise Rückstreuung bei bidirektionaler Voll-Duplex-Kommunikation aus.

Eine bekannte, allerdings ungünstige Abhilfe dieses Nachteils besteht darin, die Kommunikation auf Halb-Duplex-Betrieb, also abwechselndes Senden und Empfangen, zu reduzieren. Damit verringert sich die mögliche Datenrate jedoch auf die Hälfte und außerdem ist eine aufwendige Koordination der Datenelektronik beider Terminals erforderlich. Zur Koordination zählt vor allem die zeitliche Synchronisation der Terminals. Durch die zu erwartenden, durch die Atmosphäre bedingten Schwunderscheinungen (Fading) kann die Realisierung einer stabilen und zuverlässigen Synchronisation erhebliche Probleme bereiten, da in tiefen Fades das Synchronisationssignal verloren gehen kann. Zudem kann bei dieser abwechselnden Signalrichtung auf einen zusätzlichen Beacon zur Strahlverfolgung nicht verzichtet werden. Es ist somit keine Beaconless-Bauform möglich. Zusätzliche Beacon-Quellen, welche eine andere Wellenlänge als die Daten-Laser aufweisen müssen, machen zudem den optischen Aufbau des Teleskops komplizierter, da ein Betrieb mit mehreren Wellenlängen einen aufwendigeren optischen Aufbau bedingen.

Einige heute übliche Protokolle erlauben außerdem die mit Halb-Duplex-Betrieb einhergehenden Verzögerungen und nötigen Datenzwischenspeicherungen überhaupt nicht.

Ein optisches Freiraum-Datenkommunikationssystem mit mobilen optischen Transceivern, die gemeinsame optische Einrichtungen im Sendepfad und Empfangspfad benutzen, ist aus US 2004/0208595 A1 bekannt. Auch der vorhandene Beacon im Transceiver verwendet einen Teil dieser optischen Einrichtungen. Ein Trackingsystem sorgt für die Ausrichtung der optischen Einrichtungen des jeweiligen Transceivers auf einen anderen Transceiver, indem ein Korrekturvektor erzeugt wird, der auf das einfallende Signal vom Partner-Transceiver reagiert. Bei diesem bekannten System ergeben sich allerdings auch Probleme mit den teilweise rückgestreuten Sendesignalen des Transceivers. Es wird hier sendeseitig und empfangsseitig mit Licht von gleicher Wellenlänge gearbeitet, wobei die Trennung von Empfangssignalweg und Sendesignalweg mittels eines Duplexers vorgenommen wird.

Ein Voll-Duplex-Breitband-Laser-Freiraum-Kommunikationssystem mit unterschiedlichen Wellenlängen des Trägers für das jeweils beim Transceiver ausgesendete bzw. das beim Transceiver empfangene Signal ist aus US 6 285 476 bekannt. Dieses System ist aber nicht für Ausrichtung auf mobile Kommunikationspartner ausgelegt.

Aus US 2003/0215176 A1 ist ein mit Wellenlängenduplex arbeitendes optisches Freiraum-Kommunikationssystem bekannt, das ein erstes und ein zweites Endgerät enthält. Das erste Endgerät enthält einen optischen Sender und einen optischen Empfänger. Der optische Empfänger weist ein Teleskop, einen optoelektrischen Wandler und einen optischen Verstärker dazwischen auf. Im Rahmen eines ersten Verfahrens wird ein empfangenes optisches Signal über das Teleskop aufgenommen und in einem optischen Duplexer zum optischen Verstärker abgelenkt.

Ein optisches Sendesignal wird über den optischen Duplexer zum Teleskop übertragen. Im Rahmen eines anderen Verfahrens werden über das Teleskop mehrere optische Signale empfangen, im optischen Duplexer zum optischen Verstärker abgelenkt und die verschiedenen verstärkten optischen Signale werden durch die Wellenlängen getrennt. Mehrere optische Sendesignale werden auf verschiedenen Wellenlängen über den optischen Duplexer zum Teleskop übertragen.

Aus WO 02/095989 A1 ist ein optisches Freiraum-Kommunikationssystem mit dynamischer Ausrichtung bekannt, das zwei voneinander entfernte Laser-Transceiver umfasst. Es ist hier ein Beacon-Laser zum Aussenden eines Beacon-Strahls vorgesehen, der zum jeweils anderen Transceiver zu übertragende Informationen trägt. Ein Teleskopsystem sammelt den einfallenden Beacon-Strahl sowie den einfallenden Signalstrahl aus dem jeweils anderen Transceiver und sendet wenigstens einen austretenden Signalstrahl aus. Das schwenkbar ausgebildete Teleskop bildet seine Pupille auf einen Nachführspiegel ab. Der Beacon-Strahl wird am Nachführspiegel reflektiert und auf einem CCD-Sensor fokussiert, der die Richtung des Beacon-Strahls überwacht und für ein Rückkopplungssignal zum Nachführspiegel sorgt, damit die Nachführspiegelpositionen aufrechterhalten werden, die den Beacon-Strahl auf eine vorherbestimmte Position des CCD-Sensors und außerdem den Signalstrahl über eine kleine Apertur auf einen Signaldetektor richten.

Der vorliegenden Erfindung liegt nunmehr die Aufgabe zu Grunde, unter Ausnutzung der Terminal-Teleskop-Aperturfläche durch den Sendestrahl eine einfache, robuste und sichere Lösung ohne störende Rückstreuungsbeeinflussungen für eine Freiraum-Datenkommunikation zwischen mobilen Kommunikationspartnern und eine Strahlausrichtungsregelung in den Terminals der mobilen Kommunikationspartner bei arbiträrer Vernetzbarkeit mit beliebigen Partnerterminals im Vollduplex-Modus und bei gemeinsamer Verwendung eines Teleskops für den Sende- und Empfangsweg bei Einsatz mit oder ohne Beacon zu schaffen.

Gemäß der vorliegenden Erfindung, die sich auf ein System der eingangs genannten Art bezieht, wird diese Aufgabe in vorteilhafter Weise dadurch gelöst, dass im Terminal jedes Kommunikationspartners für den Träger des Sendesignals und denjenigen des Empfangssignals zwei nahe beieinander liegende Wellenlängen wahlweise zur Verfügung gestellt und WDM(Wavelength Diversity Multiplexing)-Komponenten vorgesehen sind, welche das gleichzeitige Übertragen von Signalen auf mehreren unterschiedlichen optischen Trägerwellenlängen über ein und dieselbe Glasfaser erlauben, so dass wahlweise verschiedene Wellenlängen und Strahlpfade zum Senden und Empfangen auswählbar sind und der Empfangspfad im Terminal jedes Kommunikationspartners für das von diesem Terminal ausgesendete Licht mittels der WDM-Komponenten oder einem Teil davon unwirksam, d.h. blind, geschaltet ist, wobei vor der Aufnahme der optischen Freiraum-Datenkommunikation die jeweiligen Sende- und Empfangswellenlängen der beteiligten Terminals verhandelt worden sind.

Um Sende- und Empfangssignal trotz Rückstreuung eines Teiles des ausgestrahlten Sendesignals unterscheiden zu können, sind mindestens zwei verschiedene Wellenlängen erforderlich, welche im Terminal-Strahlengang an passender Stelle getrennt werden können. Damit aber beliebige Terminals in einem frei konfigurierbaren Netzwerk als Kommunikationspartner miteinander kommunizieren können, benötigen alle Terminals mindestens zwei Sende-Wellenlängen zur Auswahl und eventuell auch zwei Beacon-Wellenlängen.

Das System nach der vorliegenden Erfindung zeichnet sich durch den Einsatz von WDM-Komponenten aus der terrestrischen optischen Glasfaserkommunikation aus, um wahlweise verschiedene Wellenlängen und Strahlpfade zum Senden und Empfangen auszuwählen. Dabei kann der Empfangspfad für das vom eigenen Terminal ausgesandte und damit störende Daten- bzw. Beacon-Licht blind gemacht werden.

Zudem kann gemäß vorteilhaften Weiterbildungen durch den Einsatz von Glasfaserbündeln ein sehr schneller und robuster Sensor für die Strahlregelung realisiert werden, welcher einfacher, robuster und kleiner zu bauen ist als ausgedehnte bildgebende Sensoren. Die hierbei auch verwendeten Glasfaserbündel und verlustlosen Y-Koppler sind keine Standardkomponenten, sondern neuer Bestandteil des Systems nach der Erfindung.

Gegenüber bekannten Bauformen kann nachfolgend eine Reihe von Vorteilen des Systems nach der Erfindung zum Teil unter Einschluss zweckmäßiger Weiterbildungen angegeben werden. Es besteht die Möglichkeit der arbiträren Vernetzung mit beliebigen Partnerterminals im Voll-Duplex-Modus. Für Sende- und Empfangsweg lässt sich ein Teleskop gemeinsam verwenden. Die Teleskopapertur des Terminals kann für Sende- und Empfangsstrahl bei der Verwendung eines Fiber Transceivers, d.h. eines Glasfaser-Trackingempfängers mit integrierter Sendefaser voll ausgenutzt werden. Es lässt sich eine einfache, kompakte und robuste Bauweise eines integrierten Daten- und Trackingdetektors bei Verwendung eines Faserbündelempfängers eventuell sogar mit integrierter Sendefaser realisieren. Es besteht die Möglichkeit der Ortung von Hindernissen im Nahfeld des Senders ohne erheblichen zusätzlichen Mehraufwand. Es können erprobte Standardkomponenten aus der terrestrischen Faserkommunikation weitgehend verwendet werden.

Vorteilhafte und zweckmäßige Weiterbildungen des Systems nach der vorliegenden Erfindung sind in den sich unmittelbar oder mittelbar auf den Patentanspruch 1 rückbeziehenden Unteransprüchen angegeben.

Eine vorteilhafte Verwendungsmöglichkeit des Systems nach der Erfindung besteht bei der Kommunikation zwischen allen Arten von Luftfahrzeugen, wie z.B. Flugzeugen, HAPs (High Altitude Platform; in der Stratosphäre schwebende Kommunikationsplattform), Drohnen bzw. UAVs (unmanned aerial vehicle; typisch militärische Aufklärungsdrohnen), insbesondere zwischen Flugzeugen ziviler oder militärischer Art, und zwischen jeglicher Art von Luftfahrzeugen und Kommunikationssatelliten oder Boden-Sende- und/oder Empfangsstationen.

Die Erfindung wird im Folgenden anhand von Figuren und Ausführungsbeispielen erläutert. Es zeigen:
- Fig.1: die Struktur möglicher Bauformen von MFSO-Kommunikationsterminals gemäß dem durch die Erfindung angegebenen System,
- Fig.2: einen auch als Active Pixel Array (APA) bezeichneten optischen Positionssensor,
- Fig.3: ein Beispiel eines als 4-Quadranten-Sensor mit Akquisitionsfeldern ausgeführten Positionssensors (APA),
- Fig.4: einen chromatischen Strahlteiler in Faserausführung,
- Fig.5: einen auch als Fiber Amplifier (FA) bezeichneten optischen Faserverstärker,
- Fig.6: einen Fiber Combiner (FC),
- Fig.7: eine auch als Fine Pointing Assembly (FPA) bezeichnete Feinausrichtungseinheit,
- Fig.8: einen Fiber Detector (FD) für einen Faserbündel-Trackingempfänger,
- Fig.9: einen auch als Fiber Switch (FS) bezeichneten faserintegrierten Umschalter,
- Fig.10: eine auch als PAT Control Assembly bezeichnete Recheneinheit,
- Fig.11: einen Faserbündel-Trackingreceiver (FT),
- Fig.12: einen Multimode-Y-Koppler,
- Fig.13: eine Einrichtung zur Trennung von Sende- und Empfangslicht mit einem Y-Koppler, ausgeführt mit einer Double-Clad-Fiber (CF: Multimode-Coupling-Fiber; DCF: Double-Clad-Fiber),
- Fig.14: in Blockschaltbildform ein erstes Ausführungsbeispiel eines Terminals für das System nach der Erfindung,
- Fig.15: in Blockschaltbildform ein zweites Ausführungsbeispiel eines Terminals für das System nach der Erfindung,
- Fig.16: in Blockschaltbildform ein drittes Ausführungsbeispiel eines Terminals für das System nach der Erfindung, und
- Fig.17: in Blockschaltbildform ein viertes Ausführungsbeispiel eines Terminals für das System nach der Erfindung.

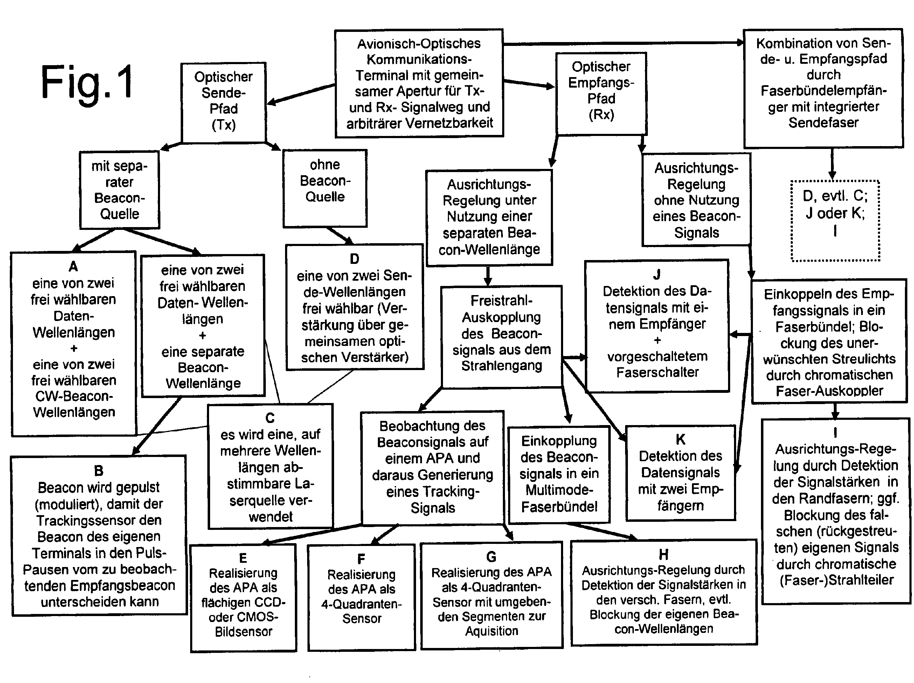

Durch die Kombination verschiedener Elemente ergibt sich eine Vielzahl von Bauformen für das System nach der Erfindung. Einen Überblick hierzu gibt Fig.1. Die Funktionsweisen der einzelnen Elemente sind später noch im Einzelnen beschrieben.

Die Kombination und Trennung von optischen Signalen geschieht in Glasfasertechnik entweder durch Faser-Schmelzkoppler (für Single-Mode- und Multimode-Fasern möglich) oder an die Fasern gespleißte Strahlteilerwürfel (ebenfalls für Single-Mode- und Multimode-Fasern) und mit Wellenlängen-Filtern in der Glasfaser und mit Glasfaser-Umschaltern. Es handelt sich bei allen diesen Elementen um kommerziell erhältliche Elemente aus der terrestrischen Glasfaserkommunikation. In Freistrahltechnik erfolgt die Kombination und Trennung von optischen Signalen durch Filtergläser, Strahlteilerwürfel (chromatisch oder neutral). Freistrahl-Schalter mittels kippbarer Spiegel wären zwar möglich, sollten hier aber auf Grund ihrer mechanischen Empfindlichkeit besser nicht verwendet werden.

Es ergeben sich unter anderem folgende sinnvolle und zweckmäßige Kombinationsmöglichkeiten der in Fig.1 mit den Buchstaben A bis K bezeichneten Bausteine:
A + E/F/G/H + J/K,
B + E/F/G/H + J/K, und
D + I + J/K.

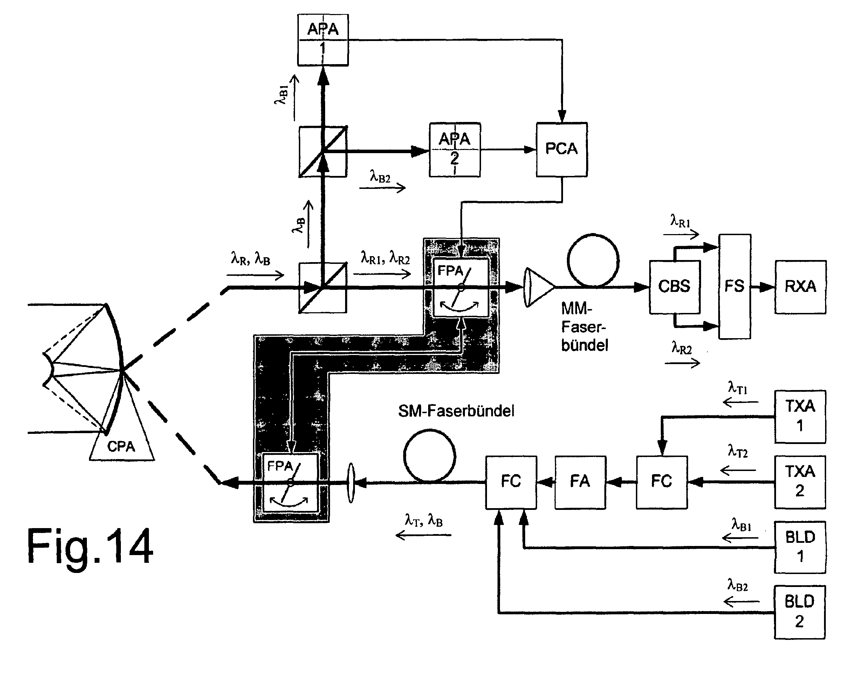

Vorteilhafte und charakteristische Ausführungsbeispiele der vorstehenden Kombinationen werden später noch anhand von Fig.14 bis 17 erläutert.

Es folgt nun eine Erläuterung der einzelnen Bauelemente.

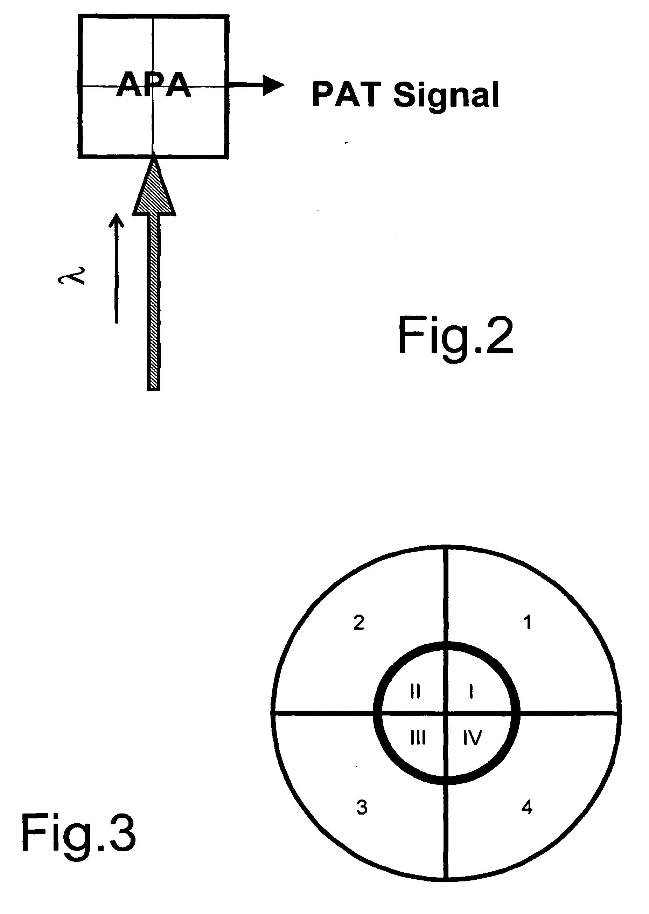

Das in Fig.2 schematisch dargestellte Active Pixel Array (A-PA) ist ein optischer Positionssensor. Es kann als optischer bildgebender Sensor, z.B. eine CCD-Einrichtung oder ein CMOS-Array, oder als ein 4-Quadranten-Sensor bzw. erweiterter 4-Quadranten-Sensor mit zusätzlichen größeren Randfeldern zur Akquisition ausgeführt sein, so wie er in Fig.3 schematisch dargestellt ist. Weiter kann als Active Pixel Array (APA) ein Faserbündel-Trackingreceiver (Fiber Detector; FD), wie er später noch beschrieben ist, verwendet werden.

Ein Beacon erzeugt gewöhnlich mittels einer Beacon-Laser-Diode (BLD) ein optisches Hilfssignal, welches die Ausrichtungsregelung des Partners auf das Sendesignal ermöglicht bzw. vereinfacht. Das Beaconsignal ist üblicherweise nicht mit Daten moduliert und wird von einem optischen Positionssensor (APA) detektiert und seine Position durch eine später noch im Einzelnen erläuterte Recheneinrichtung (PAT Control Assembly; PCA) in ein Regelsignal für die Ausrichtungsmechanik des Terminals umgewandelt. Da die Beacon-Quelle zusätzliche Leistung verbraucht und rückgestreute Anteile zum unerwünschten Hintergrundlicht im Empfangspfad beitragen, sind Bauformen ohne Beacon (beaconless) zu bevorzugen.

Um das Signal der Beacon-Laser-Diode (BLD) von anderen Lichtstrahlungsquellen unterscheiden zu können, gibt es die Möglichkeit, diese Diode mit Hilfe eines Modulators (MOD) zu modulieren bzw. zu pulsen. Dies bietet den weiteren Vorteil, dass in Zeiten, in denen der Beacon eingeschaltet ist ("1"-Impuls) der Trackingsensor (APA) blind geschaltet werden kann, um eine Fehlinterpretation der gewonnenen Trackinginformation infolge einer Rückstreuung von Licht des eigenen Beacons zu vermeiden. Dies erfordert eine Synchronisation zwischen der Beacon-Laser-Diode (BLD) bzw. dem Modulator (MOD) und dem Trackingsensor (APA) im Terminal. Des weiteren ist eine Synchronisation der Pulse der Beacons der beiden an der Kommunikation beteiligten Terminals erforderlich. Diese Synchronisation kann durch die Verwendung einer Referenzzeit erfolgen. Diese Referenzzeit kann beispielsweise durch die Verwendung der Zeitinformationen von Satellitennavigationssystemen (GPS, Galileo) erfolgen. Um die Synchronisationsanforderung zwischen den Terminals zu vermeiden, können die Beacons der Terminals mit unkorrelierten Zufallsimpulsfolgen (PN-Folgen) oder verschiedenen zufälligen Blinkfrequenzen moduliert werden.

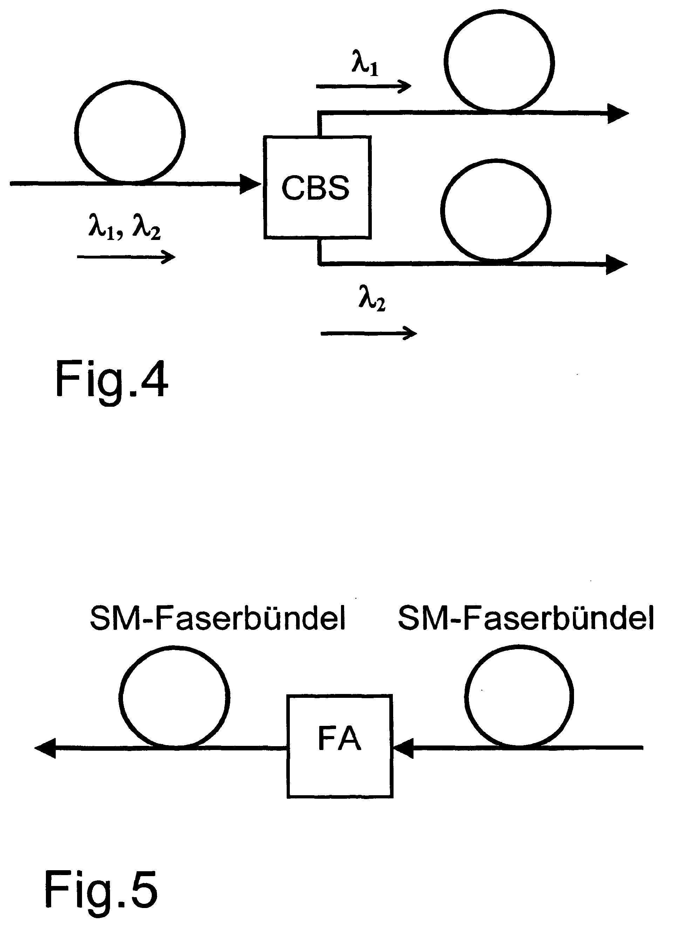

Ein auch als Chromatic Beam Splitter bezeichneter chromatischer Strahlteiler CBS dient zur wellenlängenabhängigen Trennung der optischen Signale. Strahlteiler können sowohl als Freistrahlausführung in Form von chromatischen Strahlteilerwürfeln als auch als Faserkomponente ausgeführt werden. Ein derartiger Faser-Strahlteiler CBS in Faserausführung ist in Fig.4 dargestellt und sowohl in Single-Mode- als auch in Multimode-Ausführung mit Kanal-Abständen (Spacing) von etwa 10 nm auf dem Markt erhältlich.

Ein auch als Fiber Amplifier bezeichneter optischer Faserverstärker FA, wie beispielsweise ein Erbium-Doped Fiber-Amplifier, abgekürzt EDFA, ist schematisch in Fig.5 dargestellt. EDFA beschreibt eine optische Faserverstärker-Technologie, welche Kommunikations-Wellenlängen im Bereich um 1550 nm verstärkt.

Aus der terrestrischen Glasfaserkommunikation sind optische Faserverstärker verfügbar, welche einen breiten Wellenlängenbereich von etwa 1528 nm bis etwa 1562 nm auf etwa 20 dBm Ausgangsleistung verstärken können. Dieser Wellenlängenbereich wird auch als C-Band bezeichnet. Derartige Verstärker existieren in vielen Bauformen.

Besonders vorteilhaft ist die Verwendung eines breitbandigen optischen Faserverstärkers FA, welcher mehrere Wellenlängen, beispielsweise zwischen etwa 1540 nm und 1560 nm, in einem Frequenzband verstärkt. Ein solch breitbandiger optischer Faserverstärker FA ermöglicht es, ohne großen zusätzlichen Aufwand zwei Sendewellenlängen zur Verfügung zu stellen. Des weiteren kann eventuell je nach Wellenlänge und Breitbandigkeit des Verstärkers auch das Beaconsignal mit in dem gemeinsamen optischen Faserverstärker FA verstärkt werden.

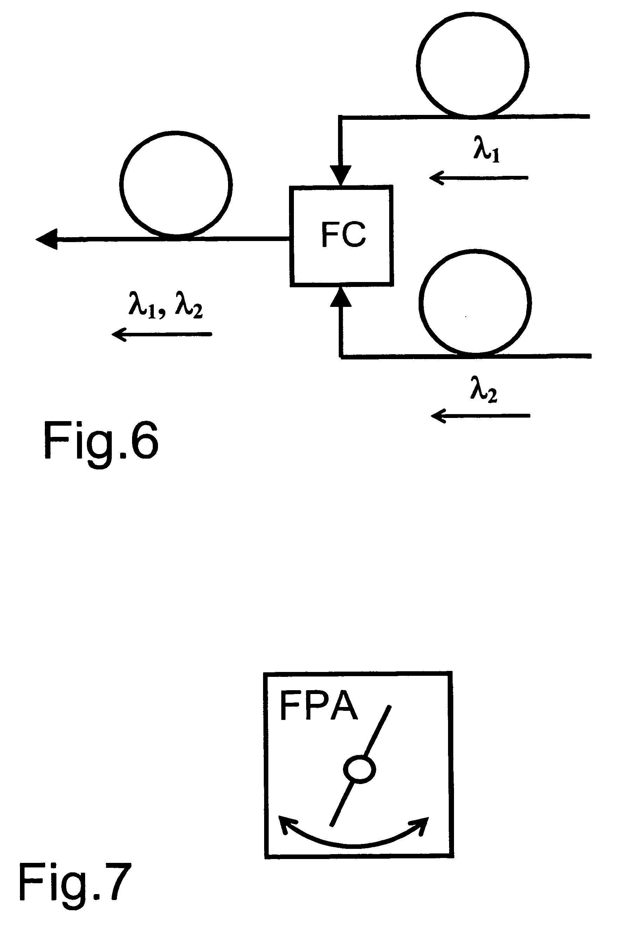

Ein Fiber Combiner FC, wie er in Fig.6 schematisch dargestellt ist, dient dem Zusammenfassen optischer Signale aus zwei oder mehreren Glasfasern, üblicherweise Single-Mode-Fasern, in eine Glasfaser.

Eine auch als Fine Pointing Assembly bezeichnete Feinausrichtungseinheit FPA, wie sie in Fig.7 schematisch dargestellt ist, dient zur Ausrichtung des Strahles sowohl sendeseitig als auch empfangsseitig. Die Feinausrichtungseinheit FPA kann durch mechanische Systeme, wie z.B. piezoelektrische Kippspiegelsysteme, aber auch nichtmechanisch durch SLMs (Spatial Light Modulator) ausgeführt werden.

Unter der Voraussetzung, dass für den Sendestrahl eines Terminals keine Point-Ahead-Anlage zu berücksichtigen ist, können die sende- und empfangsseitigen Feinausrichtungseinheiten FPA zu einer Einheit zusammengefasst werden.

Ein auch als Fiber Detector bezeichneter Faserbündel-Trackingempfänger FD besteht aus einer Kombination dicht beieinander liegender Faserenden. Nur das in die zentrale Faser eingekoppelte Licht wird als Empfangssignal für die Datenkommunikation ausgenutzt. Das Licht in den äußeren Fasern wird für Strahl-Ausrichtung, -Einfangen und -Verfolgung (Pointing, Acquisition, and Tracking; PAT) verwendet.

Es werden in diesen Bündeln hier Multimode-Fasern verwendet, da diese ein günstiges, d.h. großes Verhältnis zwischen signalführendem Faserkern-Querschnitt und isolierendem Manteldurchmesser bieten. Ein typisches Beispiel hierfür ist ein Kerndurchmesser von 200 µm, ein Manteldurchmesser von 230 µm und nur 30 µm Abstand zwischen den lichtleitenden Faserkernen. Außerdem ist die Verwendung von Multimode- Glasfasern als Empfangselement bei atmosphärischer Kommunikation vorteilhaft, da die Atmosphäre die Qualität der übertragenen optischen Welle derart reduziert, dass sie nicht mehr effizient in eine Single-Mode-Faser eingekoppelt werden kann. Die großen Kerndurchmesser von Multimode-Fasern dagegen bieten eine ausreichende Toleranz, um auch die atmosphärisch gestörten Signale effizient einkoppeln zu können.

Derartige Faserbündel können aus Multimode-Fasern hergestellt werden. Voraussetzung ist hierfür eine Faser mit möglichst großem Verhältnis von Kern- zu Manteldurchmesser, um möglichst wenig Verlust durch die Mantelflächen zwischen den Faserkernen zu haben.

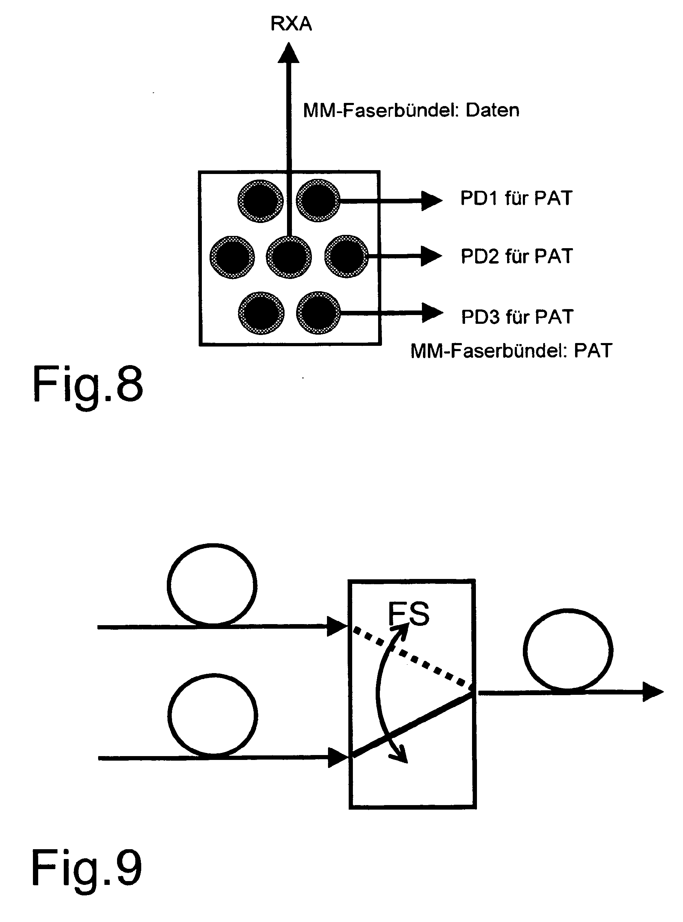

Es ist sinnvoll, die Faserkerndurchmesser der Fasern, welche zur Akquisition dienen, nach außen hin größer werden zu lassen. Die Verwendung einer signalführenden Faser mit geringem Durchmesser ist zweckmäßig, da zum einen nur Photodetektoren mit kleiner Detektorfläche zur Signaldetektion hochratiger Signale technologisch bedingt fertigbar sind und zum anderen der Sichtwinkel bei einer Faser mit kleinem Durchmesser geringer ist und somit weniger störendes Hintergrundlicht detektiert wird. Für die "Trackingfasern" ist die Verwendung von Fasern mit größerem Durchmesser zweckmäßig. Bei den Trackingfasern werden nämlich keine hochratigen Signale detektiert. Somit ist der Hintergrundlichteinfluss geringer und außerdem können für die geringen Bandbreiten größere Detektoren gefertigt werden, welche dann effizient an die Faser gekoppelt werden. Eine denkbare Kombination wäre eine zentrale Multimode-Faser mit etwa 100 µm Kerndurchmesser, um die in einem regelmäßigen Sechseck der erste Ring von sechs Trackingfasern mit etwa 100 µm Kerndurchmesser angebracht ist. Ein solcher sechseckiger Fiber-Detector FD für einen Faserbündel-Trackingempfänger ist in Fig.8 schematisch dargestellt. Ein oder mehr weitere regelmäßige Sechseck-Ringe mit sechs Fasern von etwa 300 µm und mehr Kerndurchmesser und nach außen bis etwa 1 mm größer werdendem Kerndurchmesser können noch als erweiterter Detektor für die Akquisition, ähnlich wie bei dem bereits in Verbindung mit Fig.3 erläuterten erweiterten 4-Quadranten-Detektor, dienen. Diesbezüglich ist auch eine Einrahmung - ähnlich wie beim 4-Quadranten-Detektor - des ersten inneren Ringes oder gar der zentralen Multimode-Faser mit vier sehr dicken (~ 1 mm) Trackingfasern möglich.

Realisierungsform und Einsatz dieser speziellen Faserbündel zusammen mit den nachgeschalteten Bauteilen, nämlich Filter, Faserumschalter und Daten- bzw. Beaconsignal-Empfängern, ist Gegenstand von wichtigen Weiterbildungen des Systems gemäß der vorliegenden Erfindung.

Ein auch als Fiber Switch bezeichneter faserintegrierter und in Fig.9 schematisch dargestellter Umschalter FS dient dazu, damit aus verschiedenen signalführenden Fasern eine ausgewählt werden kann. Diese faserintegrierten Umschalter FS schalten in einer hier zweckmäßig genutzten Bauform aus mehreren Eingangsfasern eine auf die Ausgangsfaser auf (sogenanntes Demultiplexing). Diese Umschalter FS gibt es in Single-Mode- und Multimode-Ausführung und sie sind kommerziell erhältlich.

Dieser faserintegrierte Umschalter FS wird im Terminal empfangsseitig zur Blockierung der jeweils falschen, weil eigenen, zum Teil rückgestreuten Sendestrahlung eingesetzt. Er bietet den Vorteil der Robustheit des Empfängers gegen Streulicht, insbesondere gegen Streulicht der eigenen Sendequelle, aber auch von Hintergrundlicht.

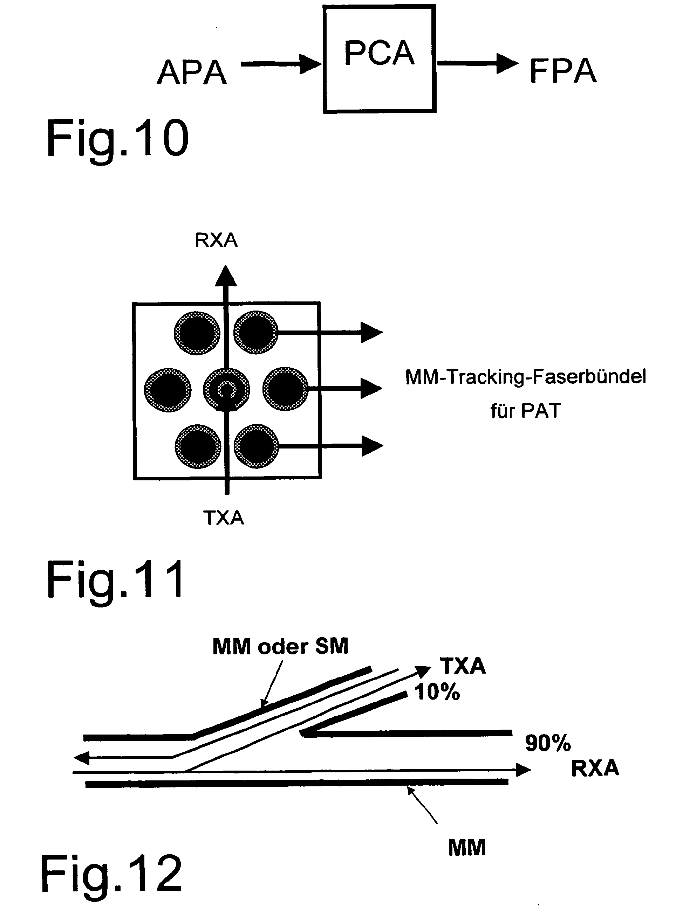

Eine auch als PAT Control Assembly bezeichnete und in Fig.10 schematisch dargestellte Recheneinheit PCA ist dazu vorgesehen, die Signale des PAT-Sensors APA auszuwerten und dementsprechend die Strahlablenkung durch die auch als Fine Pointing Assembly bezeichnete Feinausrichtungseinheit FPA durchzuführen.

Ein auch als Power Detector bezeichneter Leistungsdetektor PD dient zur Messung der optischen Empfangsleistung in der jeweils angeschlossenen Glasfaser.

Ein auch als Receive Assembly bezeichneter Datenempfänger RXA sorgt im Terminal für die Demodulation des optischen Signals und die Rückgewinnung der Daten.

Eine auch als Transmit Assembly bezeichnete optische Sendeeinheit TXA erzeugt das Laserlicht und übernimmt im Terminal die Modulation des optischen Trägers mit dem zu übertragenden Datensignal.

Werden mehrere Wellenlängen zur Auswahl benötigt, so ist es vorteilhaft, anstatt mehrerer Laserdioden eine einzige, auf mehrere Wellenlängen abstimmbare Laserdiode zu verwenden, um den Aufwand, nämlich mehrere Dioden und die Kopplung der Fasern mit einem Fiber Combiner FC, zu reduzieren.

Ein auch als Fiber-Transceiver bezeichneter Faserbündel-Trackingreceiver FT entspricht dem vorher bereits im Zusammenhang mit Fig.8 beschriebenen Fiber Detector FD, allerdings zusätzlich mit einer integrierten Sendefaser. Diese in Fig.11 schematisch dargestellte Kombination zur Zusammenführung von Sende- und Empfangsfasern ist besonders vorteilhaft, da es die Möglichkeit bietet die gesamte Teleskopaperturfläche eines Terminals sowohl für Sende- als auch für den Empfangsstrahl zu nutzen.

Da in der zentralen Faser sowohl das Sendesignal der Sendequelle TXA als auch das Empfangssignal für den Datenempfänger RXA geführt werden, müssen diese Signale getrennt werden. Dies kann beispielsweise durch einen speziellen Y-Koppler erfolgen, wie er beispielsweise in Fig.12 dargestellt ist.

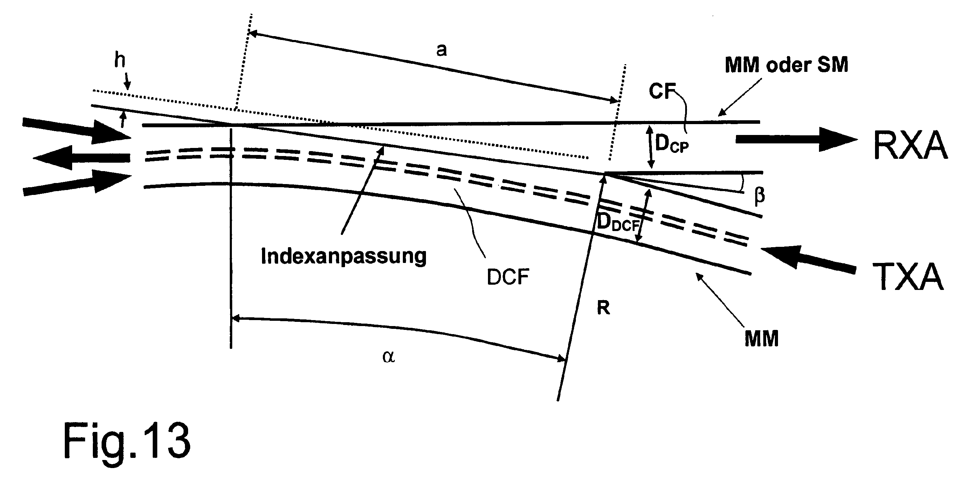

Eine andere Möglichkeit, um Sende- und Empfangssignal aus der Sendequelle TXA bzw. für den Datenempfänger RXA in der zentralen Faser zu führen, ist die Verwendung einer Double-Clad-Fiber, d.h. einer Mulitmode-(MM-)Faser mit integrierter Single-Mode-(SM-)Faser. Die Single-Mode-Faser würde hierbei das Sendelicht führen, womit ein geringer Divergenzwinkel beim Faseraustritt erzielt werden kann. Die Multimode-Faser dient mit ihrem großen Akzeptanzwinkel beim Fasereintritt zur Leitung des Empfangslichtes. Auch hier ergibt sich das Problem, diese beiden Signale zu trennen. Dieses Problem kann beispielsweise durch das spezielle Anspleißen einer weiteren Multimode-Faser gelöst werden. In Fig.13 ist die Trennung von Sende- und Empfangslicht mit einem Y-Koppler, ausgeführt mit einer Double-Clad-Fiber (CF: Multimode Coupling Fiber; DCF: Double-Clad-Fiber), dargestellt.

Nachfolgend wird ein aktiver Sicherheitsmechanismus in einem Terminal durch Auswertung der rückgestreuten Anteile beschrieben.

Blockieren Hindernisse, wie beispielsweise Personen, den Sendestrahlengang in der Nähe des Senders eines Terminals, so kommt es unter anderem zu einer starken Rückstreuung des Lichtes auf das aussendende Terminal. Auf Grund dieser Rückstreuung kann ein sich in der Nähe des Terminals befindendes Hindernis detektiert werden, da im Empfangspfad vor dem Detektor das Licht stets in einen Pfad für die Wellenlänge des Sendelichtes und für die Wellenlänge des Empfangslichtes aufgeteilt wird. Eine Reduzierung der beiden Sendequellen (Receive Assemblies) RXAs durch einen Faserumschalter FS auf nur eine Datenempfangseinheit (Receive Assembly) RXA ist in diesem Fall nicht möglich. Die hierdurch gewonnene Information kann sowohl für einen aktiven Sicherheitsmechanismus, welcher im Fall einer starken Rückstreuung die Sendeleistung reduziert, als auch zur Hindernisdetektion, beispielsweise in der Flugsicherung, benutzt werden.

Die Funktionsweise des Systems nach der Erfindung kann folgendermaßen zusammengefasst werden.

Allen Realisierungsvarianten des Systems nach der Erfindung gemeinsam ist die Verwendung von zwei nahe beieinander liegenden Datensignal-Träger-Wellenlängen. Damit kann eine arbiträre spontane Vernetzung beliebiger Terminals erfolgen. Es müssen nur vor der Aufnahme der Datenkommunikation die jeweiligen Sende- und Empfangswellenlängen der beteiligten Terminals verhandelt werden. Durch die Verwendung eines gemeinsamen Faserverstärkers für alle abzustrahlenden Wellenlängen für die Kommunikation und eines mit dem Empfangsweg gemeinsamen Sendestrahlweges kommt es so gut wie zu keinem zusätzlichen Hardware-Aufwand im Sendepfad.

Bei Verwendung von einem oder zwei Beacon-Laserquellen mit Wellenlängen in der Nähe der Datenkommunikationswellenlänge, üblicherweise bei 1550 nm, können diese Signale ebenfalls durch den gemeinsamen Faserverstärker verstärkt werden.

Bei allen Realisierungsvarianten des Systems nach der vorliegenden Erfindung wird im Empfangspfad das eventuell vom Sendepfad zurückgestreute Störlicht durch chromatische Teilung vernichtet. Dieses Streulicht kann auch für einen aktiven Sicherheitsmechanismus verwendet werden.

Durch die Verwendung eines Faserbündel-Trackingempfängers, welcher die Datenempfangseinheit und die Trackingeinheit zusammenfasst, kann der Terminalaufbau wesentlich vereinfacht werden. Bei diesen Varianten ist ein Beacon nicht mehr nötig. Dies ist insbesondere von Vorteil, da für den für die Datenkommunikation vorteilhaften Wellenlängenbereich um 1550 nm nur sehr unempfindliche und teure bildgebende PAT-Sensoren existieren.

Durch das zusätzliche Integrieren der Sendefaser in den Faserbündel-Trackingempfänger kann das System nach der vorliegenden Erfindung noch weiter vereinfacht und somit auch noch robuster gemacht werden.

Im Folgenden werden anhand von Fig.14 bis 17 vier besonders vorteilhafte Bauformen aus den Kombinationsmöglichkeiten nach Fig.1 ausführlicher dargestellt und erläutert. Die hierbei benutzten Bezugszeichen und Abkürzungen sind am Ende des Beschreibungstextes angegeben und im Einzelnen hinsichtlich ihrer Wirkungsweise erläutert.

Im Beispiel nach Fig.14 sind im Sendepfad zwei Sendequellen TXA1 und TXA2, ein gemeinsamer Daten-Sendeverstärker FA, zwei High-Power-CW-Beaconquellen BLD1 und BLD2, im Empfangspfad separate APA-Tracking-Zweige für jede Beacon-Wellenlänge und eine einzelne Empfangsfaser mit Faser-Wellenlängentrennung vorgesehen. Dieses Beispiel entspricht einem Aufbau mit der Kombination der Bausteine A + E/F/G/H + J von Fig.1.

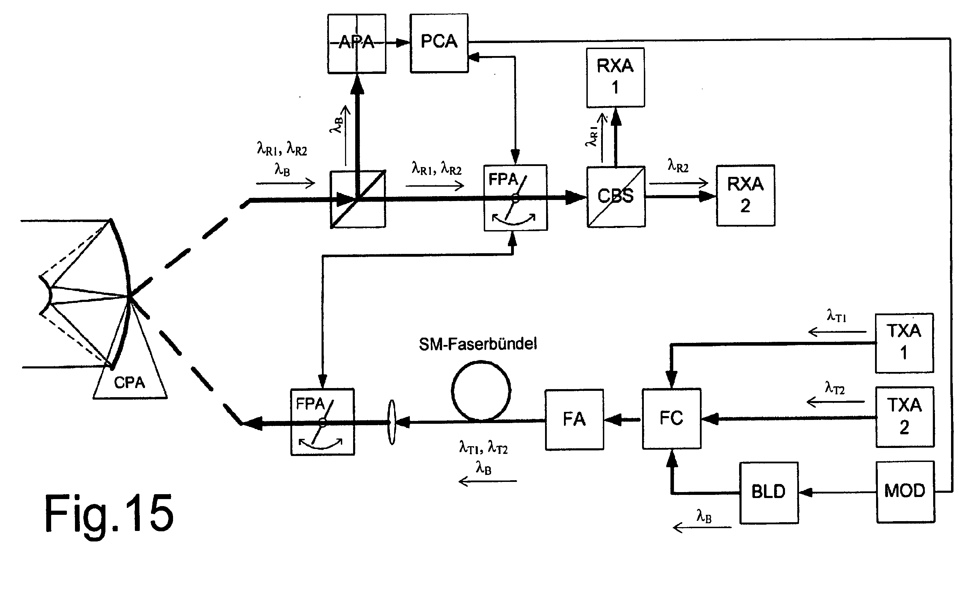

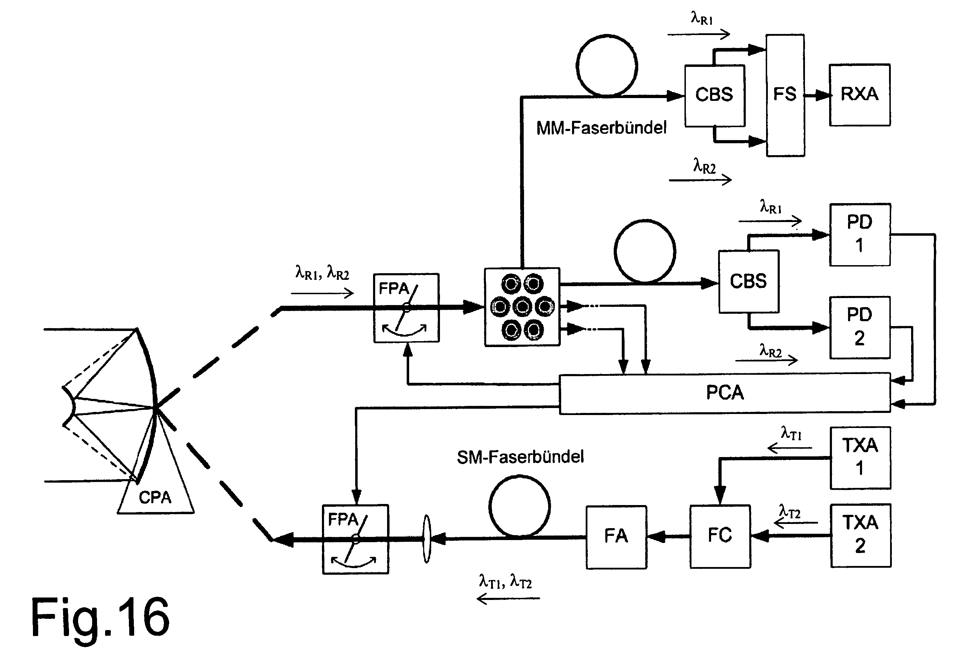

Statt der beiden APA-Trackingzweige, welche einen erheblichen zusätzlichen Hardware-und Justageaufwand bedeuten, ist auch die Verwendung eines Tracking-Faserbündelreceivers FD mit Faserbündel wie in Fig.8, bei dem jedoch alle Fasern, inklusive der zentralen Faser, über einen chromatischen Beam Splitter CBS auf einen Leistungsdetektor PD geführt werden (vg. Trackingpfade in Fig.16 oben), und mit faserintegrierter Blockierung der jeweils falschen Beacon-Wellenlänge möglich. In Fig.15 würde dann das aktive Pixel Array APA durch eien Faserbündelreceiver FD ersetzt werden.

Das aktive Pixel Array APA kann sowohl ein optischer bildgebender Sensor, z.B. eine CCD-Einrichtung oder ein CMOS-Array, oder ein 4-Quadranten-Sensor bzw. erweiterter 4-Quadranten-Sensor mit zusätzlichen Feldern sein. Anstatt des aktiven Pixel Arrays APA ist auch ein Faserbündel-Trackingreceiver zur Gewinnung des Ausrichtungssignalsdenkbar.

Zur Reduzierung des Aufwandes kann im Allgemeinen die Feinausrichtungseinheit FPA für Sende- und Empfangsweg zusammengefasst werden. Voraussetzung hierfür ist, dass der Point-Ahead-Winkel vernachlässigbar ist. Dies ist in atmosphärischen Anwendungsszenarien immer der Fall.

Im Beispiel der Fig.15 sind zwei Sendequellen TXA1 und TXA2, eine blinkende, also modulierte Beaconquelle BLD mit Modulator MOD, ein gemeinsamer Sendeverstärker FA für alle drei Signale, eine APA-Tracking-Einrichtung und ein Freistrahlempfänger vorgesehen. Dieses Beispiel entspricht einem Aufbau mit der Kombination der Bausteine B + E/F/G/H + K von Fig.1.

Statt des Freistrahlempfängers, bei dem zwei Empfangseinheiten RXA1 und RXA2 benötigt werden, ist auch der Einsatz eines Fiber-Switches FS, wie er in Fig.9 dargestellt ist, möglich.

Im Beispiel der Fig.16 sind zwei Sendequellen TXA1 und TXA2, ein gemeinsamer Verstärker FA und ein Faserbündel-TrackingEmpfänger vorgesehen. Dieses System arbeitet ohne Beacon (beaconless). Dieses Beispiel entspricht einem Aufbau mit der Kombination der Bausteine D + I + J von Fig.1.

Die Einheit aus dem Chromatic Beam Splitter CBS und den Leistungsdetektoren PD1 und PD2 muss für jede Trackingfaser (äußere Faser) vorhanden sein. Das Ausgangssignal dieser Einheiten wird der Recheneinheit PCA zugeführt, welche hieraus das Steuersignal für die Feinausrichtungseinheiten FPA errechnet.

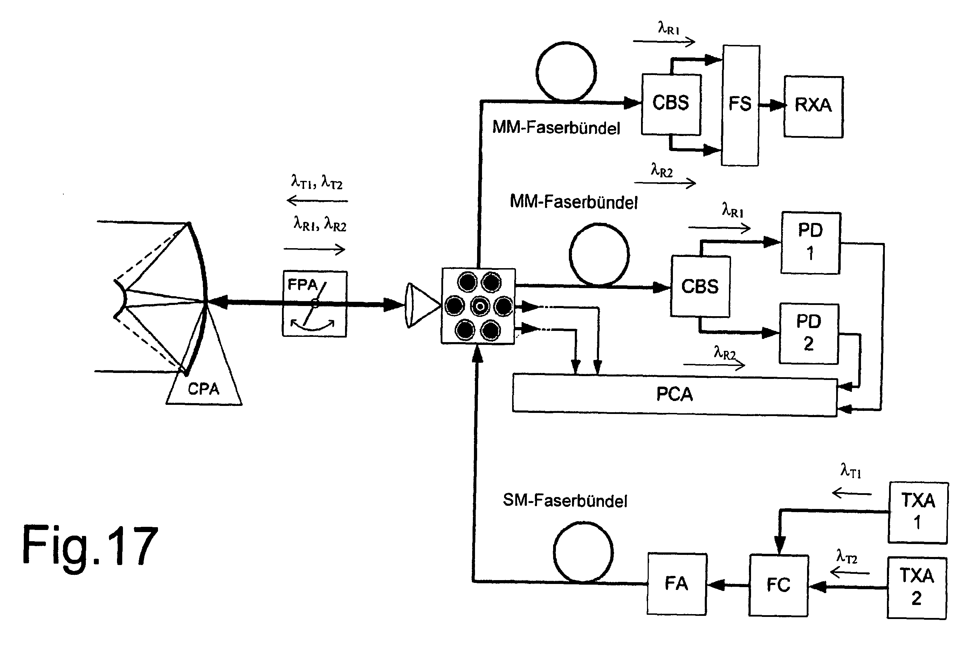

Im Beispiel der Fig.17 sind zwei Sendequellen TXA1 und TXA2, ein gemeinsamer Verstärker FA und ein Faserbündel-TrackingEmpfänger mit integrierter Sendefaser vorgesehen. Auch dieses System arbeitet ohne Beacon (beaconless). Dieses Beispiel entspricht einem Aufbau mit der Kombination der Bausteine D + I + J von Fig.1.

Die Trennung von Empfangssignal und Sendesignal geschieht hierbei durch die Multimode- oder DCF-Y-Koppler nach Fig.12 oder Fig.13.

Es folgt nun eine Auflistung und Erläuterung der im beschreibenden Text benutzten Bezugszeichen, Abkürzungen und Begriffe.
- APA: Active Pixel Array, optischer bildgebender Sensor (z.B. eine CCD-Einrichtung oder ein CMOS-Array) oder 4-Quadranten-Sensor bzw. erweiterter 4-Quadranten-Sensor mit umgebenden Feldern zur Akquisition
- Beacon: Beacon erzeugt ein optisches Hilfssignal, welches die Ausrichtungsregelung des Partners auf das Sendesignal ermöglicht bzw. vereinfacht. Das Beaconsignal ist üblicherweise nicht mit Daten moduliert und wird von einem optischen Positionssensor (APA) detektiert und seine Position in ein Regelsignal für die Ausrichtungsmechanik des Terminals umgewandelt. Da die Beaconquelle zusätzliche Leistung verbraucht und rückgestreute Anteile zum unerwünschten Hintergrundlicht im Empfangspfad beitragen sind Bauformen ohne Beacon (beaconless) zu bevorzugen.
- BLD: Beacon Laser Diode
- CBS: Chromatic Beam Splitter; Strahlteilerwürfel, spezieller Y-Koppler mit SM-, MM-, DCF-Glasfasern
- CPA: Coarse Pointing Assembly; Grobausrichtungseinheit zur Erweiterung des Sichtbereiches, falls nötig. Das CPA ist im Zusammenhang mit der FPA zu sehen.
- CW: Continuous Wave; Dauerstrich-Laserbetrieb, im Gegensatz zu gepulstem Betrieb
- EDFA: Erbium-Doped Fiber-Amplifier; optische Faserverstärker-Technologie, welche Kommunikations-Wellenlängen im Bereich um 1550 nm verstärkt
- FA: Fiber Amplifier; optischer Faserverstärker
- FC: Fiber Combiner
- FD: Fiber Detector; Faser-Trackingempfänger
- FPA: Fine Pointing Assembly; Feinausrichtungseinheit
- FS: Fiber Switch; faserintegrierter Umschalter
- FT: Fiber Transceiver: Faser-Trackingempfänger mit integrierter Sendefaser
- GPS: Global Positioning System
- HAP: High Altitude Platform; in der Stratosphäre schwebende Kommunikationsplattform
- MFSO: Mobile Free-Space Optics; mobile optische Freiraum-Kommunikationsverbindung
- MM: Mulitmode
- MOD: Modulator
- PAT: Pointing, Acquisition, and Tracking; Strahl-Ausrichtung, -Einfangen und -Verfolgung
- PCA: PAT Control Assembly; Recheneinheit für PAT-Sensor-Signale
- PD: Power Detector; Leistungsdetektor
- PN: Pseudo Noise; Pseudozufallsbitsequenz
- RXA: Receive Assembly; Datenempfänger
- SLM: spatial light modulator
- SM: Single-Mode
- TXA: Transmit Assembly; optische Sendeeinheit mit Modulation des Trägers mit Datensignal
- UAV: unmanned aerial vehicle; typisch militärische Aufklärungsdrohnen
- WDM: Wavelength-Diversity-Multiplexing; das Übertragen mehrerer modulierter Lasersignale von unterschiedlicher Wellenlänge über die gleiche Glasfaser. Hier wird ein Standard betrachtet, welcher Kanalabstände von um 10 nm vorsieht

## Patentansprüche

1. System zur bidirektionalen optischen Vollduplex-Freiraum-Datenübertragung zwischen mobilen, arbiträr vernetzbaren Kommunikationspartnern, die jeweils ein in einem Gehäuse untergebrachtes Terminal aufweisen, das für den Sende- und Empfangssignalweg mit einer gemeinsamen Teleskop-Apertur und mit einer Einrichtung zur Ausrichtungseinstellung versehen ist und bei dem die Trägerwellenlänge des Sendesignals gegenüber der Trägerwellenlänge des Empfangssignals unterschiedlich gewählt ist, **dadurch gekennzeichnet, dass** im Terminal jedes Kommunikationspartners für den Träger des Sendesignals und denjenigen des Empfangssignals zwei nahe beieinander liegende Wellenlängen wahlweise zur Verfügung gestellt und WDM(Wavelength Diversity Multiplexing)-Komponentenvorgesehen sind, welche das gleichzeitige Übertragen von Signalen auf mehreren unterschiedlichen optischen Trägerwellenlängen über ein und dieselbe Glasfaser erlauben, so dass wahlweise verschiedene Wellenlängen und Strahlpfade zum Senden und Empfangen auswählbar sind und der Empfangspfad im Terminal jedes Kommunikationspartners für das von diesem Terminal ausgesendete Licht mittels der WDM-Komponenten oder einem Teil davon unwirksam, d.h. blind, geschaltet ist, wobei vor der Aufnahme der optischen Freiraum-Datenkommunikation die jeweiligen Sende- und Empfangswellenlängen der beteiligten Terminals verhandelt worden sind.

2. System nach Anspruch 1, **dadurch gekennzeichnet, dass** als Sensor der Einrichtung für die Strahlausrichtungseinstellung ein Glasfaserbündel (FD) vorgesehen ist, das aus einer Kombination dicht beieinander liegender Glasfaserenden besteht, wobei lediglich das in die zentrale Glasfaser oder zentralen Glasfasern eingekoppelte Licht als Signal für die Datenkommunikation genutzt wird und das Licht in den äußeren Fasern für Strahl-Ausrichtung, -Einfangen und -Verfolgung (PAT; Pointing, Acquisition, and Tracking) verwendet wird.

3. System nach Anspruch 2, **dadurch gekennzeichnet, dass** als Glasfasern Multimode-Fasern vorgesehen sind.

4. System nach Anspruch 3, **dadurch gekennzeichnet, dass** die Multimode-Fasern ein möglichst großes Verhältnis von Kern- zu Manteldurchmesser aufweisen.

5. System nach Anspruch 3 oder 4, **dadurch gekennzeichnet, dass** die Faserkerndurchmesser der äußeren Glasfasern, welche zur Akquisition dienen, größer bemessen sind als die der Datenübertragung dienenden inneren Fasern.

6. System nach einem der Ansprüche 2 bis 5, **gekennzeichnet durch** eine Kombination aus einer zentralen Multimode-Faser mit etwa 100 µm Kerndurchmesser, um welche in einem regelmäßigen Sechseck ein erster Ring von sechs Tracking-Fasern von z.B. etwa 100 µm Kerndurchmesser angebracht ist, um welchen ein oder mehr weitere Ringe in regelmäßiger Sechseckform aus sechs Fasern mit etwa 300 µm und mehr Kerndurchmesser und nach außen hin größer werdendem Kerndurchmesser als erweiterter Detektor für die Akquisition angeordnet sind.

7. System nach einem der Ansprüche 2 bis 6, **dadurch gekennzeichnet, dass** zusätzlich in der zentralen Glasfaser eine Sendefaser integriert ist und dass zur Trennung von Sendesignal und Empfangssignal ein spezieller Multimode-Y-Koppler vorgesehen ist.

8. System nach einem der Ansprüche 2 bis 6, **dadurch gekennzeichnet, dass** zur gemeinsamen Führung von Sendesignal und Empfangssignal eine zentrale Glasfaser und zur Trennung von Sendesignal und Empfangssignal in der zentralen Glasfaser eine spezielle faserintegrierte Optik vorgesehen ist, die durch einen Multimode-Single-Mode- bzw. Multimode-Multimode-Y-Koppler (Fig.12) oder durch einen speziellen Schliffkoppler Double-Clad-Fiber(DCF)-Multimode bzw. Double-Clad-Fiber(DCF)-Single-Mode (Fig.13) realisierbar ist.

9. System nach Anspruch 1, **dadurch gekennzeichnet, dass** die Kombination und Trennung von optischen Signalen in Glasfasertechnik durch sowohl für Single-Mode- als auch für Multimode-Fasern einsetzbare Faser-Schmelzkoppler und mit Wellenlängen-Filtern in der Glasfaser und/oder mit Glasfaser-Umschaltern vorgenommen ist.

10. System nach Anspruch 1, **dadurch gekennzeichnet, dass** die Kombination und Trennung von optischen Signalen in Glasfasertechnik durch sowohl für Single-Mode- als auch für Multimode-Fasern einsetzbare, an die Fasern angespleißte Strahlteilerwürfel und mit Wellenlängen-Filtern in der Glasfaser und/oder mit Glasfaser-Umschaltern vorgenommen ist.

11. System nach Anspruch 1, **dadurch gekennzeichnet, dass** die Kombination und Trennung von optischen Signalen in Freistrahltechnik durch Filtergläser und/oder chromatische oder neutrale Strahlteilerwürfel vorgenommen ist.

12. System nach Anspruch 1, **dadurch gekennzeichnet, dass** im Terminal ein optischer Positionssensor in Form eines Active Pixel Array (APA) vorgesehen ist, der als optischer bildgebender Sensor z.B. in Gestalt einer CCD-Einrichtung oder eines CMOS-Arrays ausgebildet ist.

13. System nach Anspruch 1, **dadurch gekennzeichnet, dass** im Terminal ein optischer Positionssensor in Form eines Active Pixel Array (APA) vorgesehen ist, der als 4-Quadranten-Sensor oder erweiterter 4-Quadranten-Sensor mit zusätzlichen größeren Randfeldern zur Akquisition ausgebildet ist.

14. System nach Anspruch 1, **dadurch gekennzeichnet, dass** im Terminal ein optischer Positionssensor in Form eines Active Pixel Arrays (APA) vorgesehen ist, der als Glasfaserbündel entsprechend dem in den Ansprüchen 2 bis 6 angegebenen Glasfaserbündel ausgebildet ist.

15. System nach Anspruch 1, **dadurch gekennzeichnet, dass** im Terminal ein Beacon vorgesehen ist, der durch eine oder mehr Beacon-Laser-Dioden (BLD) realisierbar ist und der ein optisches Hilfssignal erzeugt, welches die Ausrichtungsregelung des Terminals des Kommunikationspartners auf das Sendesignal ermöglicht bzw. vereinfacht.

16. System nach Anspruch 15, **dadurch gekennzeichnet, dass** das vom Beacon (BLD) abgegebene Hilfssignal nicht mit Daten moduliert ist und von einem optischen Positionssensor in Form eines Active Pixel Arrays (APA) detektiert wird, dessen Positionssignal in ein Regelsignal für eine Ausrichtungsmechanik des Terminals umgewandelt wird.

17. System nach Anspruch 1, **dadurch gekennzeichnet, dass** im Terminal zur wellenlängenabhängigen Trennung der optischen Signale ein chromatischer Strahlteiler, englisch Chromatic Beam-Splitter, (CBS) vorgesehen ist, der entweder als Freistrahlausführung in Form von chromatischen Strahlteilerwürfeln oder als Faserkomponente ausführbar ist.

18. System nach Anspruch 1 oder 15, **dadurch gekennzeichnet, dass** im Terminal zur Verstärkung des Sendesignals und gegebenenfalls des Hilfssignals des Beacons ein optischer Faserverstärker (FA) vorgesehen ist.

19. System nach Anspruch 18, **dadurch gekennzeichnet, dass** der optische Faserverstärker (FA) ein Erbium-Doped Fiber-Amplifier, abgekürzt EDFA, ist.

20. System nach Anspruch 18 oder 19, **dadurch gekennzeichnet, dass** der optische Faserverstärker (FA) breitbandig ist und mehrere Wellenlängen in einem Frequenzband verstärkt.

21. System nach Anspruch 1, **dadurch gekennzeichnet, dass** im Terminal ein Fiber Combiner (FC) vorgesehen ist, der optische Signale aus zwei oder mehr Glasfasern, gewöhnlich Single-Mode-Fasern, in eine Glasfaser zusammenfasst.

22. System nach Anspruch 1, **dadurch gekennzeichnet, dass** im Terminal zur sende- sowie empfangsseitigen Ausrichtung des Strahles eine auch als Fine Pointing Assembly bezeichnete Feinausrichtungseinheit (FPA) vorgesehen ist.

23. System nach Anspruch 22, **dadurch gekennzeichnet, dass** die Feinausrichtungseinheit (FPA) als ein mechanisches System, wie z.B. ein piezoelektrisches Kippspiegelsystem, ausgeführt ist.

24. System nach Anspruch 22, **dadurch gekennzeichnet, dass** die Feinausrichtungseinheit (FPA) als ein nichtmechanisches System in Form eines Spatial Light Modulators, abgekürzt SLM, ausgeführt ist.

25. System nach einem der Ansprüche 22 bis 24, **dadurch gekennzeichnet, dass** unter der Voraussetzung, dass für den Sendestrahl keine Point-Ahead-Anlage zu berücksichtigen ist, die sende- und empfangsseitigen Feinausrichtungseinheiten (FPA) zu einer Einheit zusammengefasst sind.

26. System nach Anspruch 1, **dadurch gekennzeichnet, dass** im Terminal ein oder mehrere auch als Fiber Switch bezeichnete faserintegrierte Umschalter (FS) vorgesehen sind, die aus verschiedenen signalführenden Glasfasern eine auswählen und nach Art eines Demultiplexing aus zwei oder mehr Eingangsfasern eine auf eine Ausgangsfaser durchschalten.

27. System nach Anspruch 26, **dadurch gekennzeichnet, dass** im Terminal ein faserintegrierter Umschalter (FS) empfangsseitig zur Blockierung der jeweils falschen, weil eigenen, teilweise rückgestreuten Sendestrahlung vorgesehen ist.

28. System nach Anspruch 1, **dadurch gekennzeichnet, dass** im Terminal eine Recheneinheit (PCA) vorgesehen ist, welche die Signale des Sensors (APA) für Strahl-Ausrichtung, -Einfangen und -Verfolgung (PAT; Pointing, Acquisition, and Tracking) auswertet und dementsprechend die Strahlablenkung durch die Feinausrichtungseinheit (FPA) durchführt.

29. System nach Anspruch 1, **dadurch gekennzeichnet, dass** im Terminal ein auch als Power Detector bezeichneter Leistungsdetektor (PD) zur Messung der optischen Empfangsleistung in der jeweils angeschlossenen Glasfaser vorgesehen ist.

30. System nach Anspruch 1, **dadurch gekennzeichnet, dass** im Terminal ein auch als Receive Assembly bezeichneter Datenempfänger (RXA) zur Demodulation des optischen Signals und zur Rückgewinnung der Daten vorgesehen ist.

31. System nach Anspruch 1, **dadurch gekennzeichnet, dass** im Terminal eine auch als Transmit Assembly bezeichnete optische Sendeeinheit (TXA) vorgesehen ist, welche eine oder mehrere Laserdioden zur Erzeugung des optischen Trägers enthält und außerdem die Modulation des optischen Trägers mit dem zu übertragenden Datensignal übernimmt.

32. System nach Anspruch 31, **dadurch gekennzeichnet, dass** im Terminal zur Auswahl mehrerer Wellenlängen anstatt mehrerer Laserdioden eine auf mehrere Wellenlängen abstimmbare Laser-diode vorgesehen ist.

33. System nach Anspruch 1, **dadurch gekennzeichnet, dass** im Terminal ein aktiver Sicherheitsmechanismus durch Auswertung der rückgestreuten Anteile des Sendesignals vorgesehen ist, so dass ein eine starke Rückstreuung verursachendes Hindernis im Sendestrahlengang in der Nähe des Terminals detektierbar ist.

34. System nach Anspruch 33, **dadurch gekennzeichnet, dass** der aktive Sicherheitsmechanismus im Fall einer starken Rückstreuung die Sendeleistung reduziert.

35. System nach Anspruch 33, **dadurch gekennzeichnet, dass** der aktive Sicherheitsmechanismus zur Hindernisdetektion beispielsweise in der Flugsicherung eingesetzt wird.

36. System nach Anspruch 1, **dadurch gekennzeichnet, dass** im optischen Terminal der mobilen Kommunikationspartner im optischen Sendepfad mit separater Beacon-Quelle als Sendesignal-Träger eine von zwei frei wählbaren Datensignal-Wellenlängen und als Beacon-Signal eine von zwei frei wählbaren CW-Wellenlängen vorgesehen sind, dass im optischen Empfangspfad des Terminals eine Ausrichtungsregelung unter Nutzung einer separaten Beacon-Wellenlänge, eine Einrichtung zur Freistrahl-Auskopplung des Beacon-Signals aus dem Strahlengang, eine Einrichtung zur Beobachtung des Beacon-Signals auf einem Sensor (APA) für Strahl-Ausrichtung, -Einfangen und -Verfolgung (PAT; Pointing, Acquisition, and Tracking) und daraus zur Generierung eines Tracking-Signals vorgesehen sind, wobei dieser Sensor entweder als flächiger CCD- oder CMOS-Bildsensor oder als 4-Quadranten Sensor oder als 4-Quadranten-Sensor mit umgebenden Segmenten zur Akquisition realisiert ist, und dass im optischen Empfangspfad des Terminals außerdem eine Einrichtung zur Detektion des Datensignals mit einem Empfänger und einem vorgeschaltetem Faserschalter oder mit zwei Empfängern vorgesehen ist, wobei das zu detektierende Empfangssignal aus der Einrichtung zur Freistrahl-Auskopplung des Beacon-Signals aus dem Strahlengang ausgekoppelt wird.

37. System nach Anspruch 1, **dadurch gekennzeichnet, dass** im optischen Terminal der mobilen Kommunikationspartner im optischen Sendepfad mit separater Beacon-Quelle als Sendesignal-Träger eine von zwei frei wählbaren Datensignal-Wellenlängen und als Beacon-Signal eine von zwei frei wählbaren CW-Wellenlängen vorgesehen sind, dass im optischen Empfangspfad des Terminals eine Ausrichtungsregelung unter Nutzung einer separaten Beacon-Wellenlänge, eine Einrichtung zur Freistrahl-Auskopplung des Beacon-Signals aus dem Strahlengang und eine Einrichtung zur Einkopplung des Beacon-Signals in ein Multimode-Faserbündel vorgesehen sind, wobei die Ausrichtungsregelung durch Detektion der Signalstärken in den verschiedenen Glasfasern unter eventueller Blockierung der eigenen Beacon-Wellenlänge vorgenommen wird, und dass im optischen Empfangspfad des Terminals außerdem eine Einrichtung zur Detektion des Datensignals mit einem Empfänger und einem vorgeschaltetem Faserschalter oder mit zwei Empfängern vorgesehen ist, wobei das zu detektierende Empfangssignal aus der Einrichtung zur Freistrahl-Auskopplung des Beacon-Signals aus dem Strahlengang ausgekoppelt wird.

38. System nach Anspruch 1, **dadurch gekennzeichnet, dass** im optischen Terminal der mobilen Kommunikationspartner im optischen Sendepfad mit separater Beacon-Quelle als Sendesignal-Träger eine von zwei frei wählbaren Datensignal-Wellenlängen und als Beacon-Signal eine separate Beacon-Wellenlänge vorgesehen sind, wobei der Beacon gepulst, also moduliert wird, damit ein empfangsseitiger Tracking-Sensor den Beacon des eigenen Terminals in den Puls-Pausen vom zu beobachtenden Empfangsbeacon unterscheiden kann, dass im optischen Empfangspfad des Terminals eine Ausrichtungsregelung unter Nutzung einer separaten Beacon-Wellenlänge, eine Einrichtung zur Freistrahl-Auskopplung des Beacon-Signals aus dem Strahlengang und eine Einrichtung zur Beobachtung des Beacon-Signals auf einem Sensor (APA) für Strahl-Ausrichtung, -Einfangen und -Verfolgung (PAT; Pointing, Acquisition, and Tracking) und daraus zur Generierung eines Tracking-Signals vorgesehen sind, wobei dieser Sensor entweder als flächiger CCD- oder CMOS-Bildsensor oder als 4-Quadranten Sensor oder als 4-Quadranten-Sensor mit umgebenden Segmenten zur Akquisition realisiert ist, und dass im optischen Empfangspfad des Terminals außerdem eine Einrichtung zur Detektion des Datensignals mit einem Empfänger und einem vorgeschaltetem Faserschalter oder mit zwei Empfängern vorgesehen ist, wobei das zu detektierende Empfangssignal aus der Einrichtung zur Freistrahl-Auskopplung des Beacon-Signals aus dem Strahlengang ausgekoppelt wird.

39. System nach Anspruch 1, **dadurch gekennzeichnet, dass** im optischen Terminal der mobilen Kommunikationspartner im optischen Sendepfad mit separater Beacon-Quelle als Sendesignal-Träger eine von zwei frei wählbaren Datensignal-Wellenlängen und als Beacon-Signal eine separate Beacon-Wellenlänge vorgesehen sind, wobei der Beacon gepulst, also moduliert wird, damit ein empfangsseitiger Tracking-Sensor den Beacon des eigenen Terminals in den Puls-Pausen vom zu beobachtenden Empfangsbeacon unterscheiden kann, dass im optischen Empfangspfad des Terminals eine Ausrichtungsregelung unter Nutzung einer separaten Beacon-Wellenlänge, eine Einrichtung zur Freistrahl-Auskopplung des Beacon-Signals aus dem Strahlengang und eine Einrichtung zur Einkopplung des Beacon-Signals in ein Multimode-Faserbündel vorgesehen sind, wobei die Ausrichtungsregelung durch Detektion der Signalstärken in den verschiedenen Glasfasern unter eventueller Blockierung der eigenen Beacon-Wellenlänge vorgenommen wird, und dass im optischen Empfangspfad des Terminals außerdem eine Einrichtung zur Detektion des Datensignals mit einem Empfänger und einem vorgeschaltetem Faserschalter oder mit zwei Empfängern vorgesehen ist, wobei das zu detektierende Empfangssignal aus der Einrichtung zur Freistrahl-Auskopplung des Beacon-Signals aus dem Strahlengang ausgekoppelt wird.

40. System nach Anspruch 1, **dadurch gekennzeichnet, dass** im optischen Terminal der mobilen Kommunikationspartner im optischen Sendepfad keine Beacon-Quelle vorgesehen ist (beaconless) und eine von zwei Sendesignal-Trägerwellenlängen frei wählbar ist, wobei eine Verstärkung des Sendesignals über einen gemeinsamen optischen Verstärker vorgenommen werden kann, dass im optischen Empfangspfad des Terminals eine Ausrichtungsregelung ohne Nutzung eines Beacon-Signals und dazu eine Einrichtung zum Einkoppeln des Empfangssignals in ein Faserbündel unter Blockierung des unerwünschten Streulichtes durch chromatischen Faser-Auskoppler und eine Einrichtung zur Ausrichtungsregelung durch Detektion der Signalstärken in den äußeren Fasern des Faserbündels gegebenenfalls unter Blockierung des falschen, teilweise rückgestreuten eigenen Sendesignals durch chromatische Faser-Strahlteiler vorgesehen sind und dass im optischen Empfangspfad des Terminals außerdem eine Einrichtung zur Detektion des Datensignals mit einem Empfänger und einem vorgeschaltetem Faserschalter oder mit zwei Empfängern vorgesehen ist, wobei das zu detektierende Empfangssignal aus der Einrichtung zum Einkoppeln des Empfangssignals in ein Faserbündel unter Blockierung des unerwünschten Streulichtes durch chromatischen Faser-Auskoppler ausgekoppelt wird.

41. System nach Anspruch 1, **dadurch gekennzeichnet, dass** der Sendepfad und der Empfangspfad durch Faserbündelempfänger mit integrierter Sendefaser im optischen Terminal der mobilen Kommunikationspartner kombiniert sind, dass im kombinierten optischen Sendepfad keine Beacon-Quelle vorgesehen ist (beaconless) und eine von zwei Sendesignal-Trägerwellenlängen frei wählbar ist, wobei eine Verstärkung des Sendesignals über einen gemeinsamen optischen Verstärker vorgenommen werden kann, dass im kombinierten optischen Empfangspfad des Terminals eine Ausrichtungsregelung ohne Nutzung eines Beacon-Signals und dazu eine Einrichtung zum Einkoppeln des Empfangssignals in ein Faserbündel unter Blockierung des unerwünschten Streulichtes durch chromatischen Faser-Auskoppler und eine Einrichtung zur Ausrichtungsregelung durch Detektion der Signalstärken in den äußeren Fasern des Faserbündels gegebenenfalls unter Blockierung des falschen, teilweise rückgestreuten eigenen Sendesignals durch chromatische Faser-Strahlteiler vorgesehen sind und dass im kombinierten optischen Empfangspfad des Terminals außerdem eine Einrichtung zur Detektion des Datensignals mit einem Empfänger und einem vorgeschaltetem Faserschalter oder mit zwei Empfängern vorgesehen ist, wobei das zu detektierende Empfangssignal aus der Einrichtung zum Einkoppeln des Empfangssignals in ein Faserbündel unter Blockierung des unerwünschten Streulichtes durch chromatischen Faser-Auskoppler ausgekoppelt wird.

42. System nach einem der Ansprüche 36 bis 41, **dadurch gekennzeichnet, dass** im Sendepfad des Terminals eine auf mehrere Wellenlänge abstimmbare Laserquelle, z.B. Laserdiode, vorgesehen ist.

43. Verwendung des System nach einem der vorhergehenden Ansprüche bei der Kommunikation zwischen allen Arten von Luftfahrzeugen, wie z.B. Flugzeugen, HAPs, Drohnen bzw. UAVs, insbesondere zwischen zivilen und/oder militärischen Flugzeugen, und zwischen jeglichen Arten von Luftfahrzeugen und Kommunikationssatelliten oder mobilen Boden-Sende/Empfangsstationen.

## Claims

1. A system for bidirectional full-duplex data transmission in optical free space between mobile, arbitrarily linkable communication parties, each having a terminal accommodated within a housing that, for the transmission and reception signal path, is provided with a common telescope aperture and with pointing adjustment means, and wherein the carrier wavelength of the transmission signal is selected such that it differs from the wavelength of the reception signal, **characterized in that**, in the terminal of each communication party, two closely proximal wavelengths are selectively available for the carrier of the transmission signal and that of the reception signal and WDM (Wavelength Diversity Multiplexing) components are provided which allow for a simultaneous transmission of signals on a plurality of different optical carrier wavelengths on a single glass fiber, so that selectively different wavelengths and beam paths for transmission and reception may be chosen, and the WDM components or a part thereof are used to render the reception path in the terminal of each communication party ineffective, i.e. blind, for the light emitted from this terminal, the respective transmission and reception wavelengths of the terminals concerned having been agreed upon before the start of the data communication in optical free space.

2. The system of claim 1, **characterized in that** a glass fiber bundle (FD) is provided as the sensor of the means for adjusting the beam pointing, which bundle is comprised of a combination of closely spaced glass fiber ends, wherein only the light coupled into the central glass fiber or the central glass fibers is used as a signal for data communication and the light in the outer fibers is used for beam pointing, acquisition and tracking (PAT).

3. The system of claim 2, **characterized in that** multimode fibers are provided as the glass fibers.

4. The system of claim 3, **characterized in that** ratio of the core diameter to the sheath diameter of the multimode fibers is as large as possible.

5. The system of claim 3 or 4, **characterized in that** the fiber core diameters of the outer glass fibers that are used for acquisition have larger dimensions than those of the inner fibers serving for data communication.

6. The system of one of claims 2 to 5, **characterized by** a combination of a central multimode fiber having a core diameter of about 100 µm, around which a first ring of six tracking fibers of a core diameter of approximately 100 µm, for example, is arranged in a regular hexagon, around which one or a plurality of further regular hexagonal rings of six fibers are arranged as an extended detector for acquisition, the core diameter of said fibers being approximately 300 µm and more and increasing towards the outside.

7. The system of one of claims 2 to 6, **characterized in that** a transmission fiber is integrated in addition in the central glass fiber, and that a special multimode Y-coupler is provided for separating the transmission signal and the reception signal.

8. The system of one of claims 2 to 6, **characterized in that** a central glass fiber is provided for guiding of the transmission signal and the reception signal in common, and a special fiber-integrated optic is provided in the central glass fiber for separating the transmission signal from the reception signal, which optic can be realized by a multimode-single mode or multimode-multimode Y-coupler (Fig. 12) or by a special taper coupler, such as a double clad fiber (DCF) multimode or a double clad fiber (DCF) single mode coupler (Fig. 13).

9. The system of claim 1, **characterized in that** the combination and separation of optical signals is effected in glass fiber technology with fused fiber couplers applicable both for single mode and multimode fibers, and with wavelength filters in the glass fibers and/or with glass fiber switches.

10. The system of claim 1, **characterized in that** the combination and separation of optical signals is effected in glass fiber technology with beam splitter cubes spliced to the fibers and applicable both for single mode and multimode fibers, and with wavelength filters in the glass fiber and/or with glass fiber switches.

11. The system of claim 1, **characterized in that** the combination and separation of optical signals is effected in free-beam technology with filter glasses and/or chromatic or neutral beam splitter cubes.

12. The system of claim 1, **characterized in that** an optical position sensor in the form of an active pixel array (APA) is provided in the terminal, which is configured as an optical imaging sensor, e.g. in the form of a CCD means or a CMOS array.

13. The system of claim 1, **characterized in that** an optical position sensor in the form of an active pixel array (APA) is provided in the terminal, which is configured as a 4-quadrant sensor or an extended 4-quadrant sensor with additional larger fringe fields for acquisition.

14. The system of claim 1, **characterized in that** an optical position sensor in the form of an active pixel array (APA) is provided in the terminal, which is configured as a glass fiber bundle as defined in claims 2 to 6.

15. The system of claim 1, **characterized in that** a beacon is provided in the terminal, which may be realized with one or a plurality of beacon laser diodes (BLD) and which generates an auxiliary optical signal allowing or facilitating the pointing adjustment of the terminal of the respective communication party to the transmission signal.

16. The system of claim 15, **characterized in that** the auxiliary signal emitted by the beacon (BLD) is not modulated with data and is detected by an optical position sensor in the form of an active pixel array (APA) whose position signal is converted to a control signal for a pointing mechanism of the terminal.

17. The system of claim 1, **characterized in that** a chromatic beam splitter (CBS) is provided in the terminal for wavelength-dependant separation of the optical signals, which may be configured either as a free beam design in the form chromatic beam splitter cubes or as a fiber component.

18. The system of claim 1 or 15, **characterized in that** an optical fiber amplifier (FA) is provided in the terminal for the amplification of the transmission signal and, possibly, of the auxiliary signal of the beacon.

19. The system of claim 18, **characterized in that** the optical fiber amplifier (FA) is an erbium-doped fiber amplifier (EDFA).

20. The system of claim 18 or 19, **characterized in that** the optical fiber amplifier (FA) is a broadband device and amplifies a plurality of wavelengths in a frequency band.

21. The system of claim 1, **characterized in that** a fiber combiner (FC) is provided in the terminal, which concentrates optical signals from two or more glass fibers, usually single mode fibers, in one glass fiber.

22. The system of claim 1, **characterized in that** a fine pointing assembly (FPA) is provided in the terminal for pointing the beam at the transmission and the reception side, respectively.

23. The system of claim 22, **characterized in that** the fine pointing assembly (FPA) is configured as a mechanical system, such as a piezo-electric adjustable mirror system, for example.

24. The system of claim 22, **characterized in that** the fine pointing assembly (FPA) is configured as a non-mechanical system in the form of a spatial light modulator (SLM).

25. The system of one of claims 22 to 24, **characterized in that**, provided no point ahead installation must be taken into account for the transmission beam, the fine pointing assemblies (FPA) on the transmission and reception side are combined into a unit.

26. The system of claim 1, **characterized in that** the terminal is further provided with one or a plurality of fiber-integrated switches (FS), also referred to as fiber switches, which select one among various signal-carrying glass fibers and, in a demultiplexing manner, switch through one of two or more input fibers to one output fiber.

27. The system of claim 26, **characterized in that** a fiber-integrated switch (FS) is provided in the terminal on the reception side to block respective false transmission radiation which is its own, partly backscattered transmission radiation.

28. The system of claim 1, **characterized in that** the terminal is provided with a computing unit (PCA) that evaluates the signals from the sensor (APA) for pointing, acquisition and tracking (PAT) and correspondingly effects the beam deflection by means of the fine pointing assembly (FPA).

29. The system of claim 1, **characterized in that** the terminal is further provided with a power detector (PD) for measuring the received optical power in the respective connected glass fiber.

30. The system of claim 1, **characterized in that** the terminal is further provided with a data receiver (RXA), also called a receive assembly, for the demodulation of the optical signal and for recovering the data.

31. The system of claim 1, **characterized in that** the terminal is further provided with a optical transmit assembly (TXA) including one or a plurality of laser diodes for generating the optical carrier and further performing the modulation of the optical carrier with the data signal to be transmitted.

32. The system of claim 31, **characterized in that**, instead of a plurality of laser diodes, one laser diode tunable to a plurality of wavelengths is provided in the terminal for selecting a plurality of wavelengths.

33. The system of claim 1, **characterized in that** the terminal is provided with an active safety mechanism by evaluating the backscattered portions of the transmission signal so that an obstacle causing strong backscattering can be detected in the beam path near the terminal.

34. The system of claim 33, **characterized in that** the active safety mechanism reduces the transmission power in the event of strong backscattering.

35. The system of claim 33, **characterized in that** the active safety mechanism is used for detecting obstacles in air traffic control, for example.

36. The system of claim 1, **characterized in that**, in the optical terminal of the mobile communication parties, one of two freely selectable data signal wavelengths is provided as the transmission signal carrier and one of two freely selectable CW wavelengths is provided as the beacon signal in the optical transmission path including a separate beacon source, that the optical reception path of the terminal is provided with a pointing control using a separate beacon wavelength, a means for a free-beam outcoupling of the beacon signal from the signal path, a means for monitoring the beacon signal on a sensor (APA) for pointing, acquisition and tracking (PAT) and for generating a tracking signal therefrom, this sensor either being configured as a two-dimensional CCD or CMOS image sensor or as a 4-quadrant sensor or as a 4-quadrant sensor with surrounding segments for acquisition, and that the optical reception path of the terminal is further provided with a means for detecting the data signal comprising a receiver and a fiber switch connected upstream or comprising two receivers, the reception signal to be detected being coupled out from the means for the free-beam outcoupling of the beacon signal from the beam path.

37. The system of claim 1, **characterized in that**, in the optical terminal of the mobile communication parties, one of two freely selectable data signal wavelengths is provided as the transmission signal carrier and one of two freely selectable CW wavelengths is provided as the beacon signal in the optical transmission path including a separate beacon source, that the optical reception path of the terminal is provided with a pointing control using a separate beacon wavelength, a means for a free-beam outcoupling of the beacon signal from the signal path and means for coupling the beacon signal into a bundle of multimode fibers, the pointing control being effected by detecting the signal intensities in the different glass fibers, possibly while blocking the own beacon wavelength, and that the optical reception path of the terminal is further provided with a means for detecting the data signal comprising a receiver and a fiber switch connected upstream or comprising two receivers, the reception signal to be detected being coupled out from the means for the free-beam outcoupling of the beacon signal from the beam path.

38. The system of claim 1, **characterized in that,** in the optical terminal of the mobile communication parties, one of two freely selectable data signal wavelengths is provided as the transmission signal carrier and a separate beacon wavelength is provided as the beacon signal in the optical transmission path including a separate beacon source, the beacon being pulsed, i.e. modulated, so that, in the pauses between pulses, a reception-side tracking sensor can differentiate between the beacon of the own terminal and the reception beacon to be monitored, that the optical reception path of the terminal is provided with a pointing control using a separate beacon wavelength, a means for a free-beam feeding-out of the beacon signal from the signal path, a means for monitoring the beacon signal on a sensor (APA) for pointing, acquisition and tracking (PAT) and for generating a tracking signal therefrom, this sensor either being configured as a two-dimensional CCD or CMOS image sensor or as a 4-quadrant sensor or as a 4-quadrant sensor with surrounding segments for acquisition, and that the optical reception path of the terminal is further provided with a means for detecting the data signal comprising a receiver and a fiber switch connected upstream or comprising two receivers, the reception signal to be detected being coupled out from the means for the free-beam outcoupling of the beacon signal from the beam path.

39. The system of claim 1, **characterized in that**, in the optical terminal of the mobile communication parties, one of two freely selectable data signal wavelengths is provided as the transmission signal carrier and a separate beacon wavelength is provided as the beacon signal in the optical transmission path including a separate beacon source, the beacon being pulsed, i.e. modulated, so that, in the pauses between pulses, a reception-side tracking sensor can differentiate between the beacon of the own terminal and the reception beacon to be monitored, that the optical reception path of the terminal is provided with a pointing control using a separate beacon wavelength, a means for a free-beam outcoupling of the beacon signal from the signal path, and means for coupling the beacon signal into a bundle of multimode fibers, the pointing control being effected by detecting the signal intensities in the different glass fibers, possibly while blocking the own beacon wavelength, and that the optical reception path of the terminal is further provided with a means for detecting the data signal comprising a receiver and a fiber switch connected upstream or comprising two receivers, the reception signal to be detected being coupled out from the means for the free-beam outcoupling of the beacon signal from the beam path.

40. The system of claim 1, **characterized in that**, in the optical terminal of the mobile communication parties, no beacon source is provided in the (beaconless) optical transmission path and one of two data signal wavelengths is freely selectable, wherein the transmission signal may be amplified by means of a common optical amplifier, that the optical reception path of the terminal is provided with a pointing control not using a beacon signal and that, for this purpose, a means for coupling the reception signal into a fiber bundle while blocking the undesired scattered light by a chromatic fiber output coupler device and a means for pointing control by detection of the signal intensities in the outer fibers of the fiber bundle, possibly while blocking the false, partly backscattered own transmission signal by chromatic fiber beam splitters, are provided, and that the optical reception path of the terminal is further provided with a means for detecting the data signal comprising a receiver and a fiber switch connected upstream or comprising two receivers, the reception signal to be detected being coupled out from the means for coupling the reception signal into a fiber bundle while blocking the undesired scattered light by means of a chromatic fiber output coupler device.

41. The system of claim 1, **characterized in that**, in the optical terminal of the mobile communication parties, the transmission path and the reception path are combined by means of a fiber bundle receiver with an integrated transmission fiber, that no beacon source is provided in the (beaconless) optical transmission path and one of two data signal wavelengths is freely selectable, wherein the transmission signal may be amplified by means of a common optical amplifier, that the combined optical reception path of the terminal is provided with a pointing control not using a beacon signal and that, for this purpose, a means for coupling the reception signal into a fiber bundle while blocking the undesired scattered light by a chromatic fiber feed-out device and a means for pointing control by detection of the signal intensities in the outer fibers of the fiber bundle, possibly while blocking the false, partly backscattered own transmission signal by chromatic fiber beam splitters, are provided, and that the combined optical reception path of the terminal is further provided with a means for detecting the data signal comprising a receiver and a fiber switch connected upstream or comprising two receivers, the reception signal to be detected being coupled out from the means for coupling the reception signal into a fiber bundle while blocking the undesired scattered light by means of a chromatic fiber output coupler device.

42. The system of one of claims 36 to 41, **characterized in that** the transmission path of the terminal is provided with a laser source, e.g. a laser diode, tunable to a plurality of wavelengths.

43. Use of the system of one of the preceding claims in communication between all kinds of aircraft, such as planes, HAPs, drones or UAVs, in particular between civilian and/or military planes, and between all kinds of aircraft and communication satellites or mobile ground transceiver stations.

## Revendications

1. Système pour la transmission bidirectionnelle optique en espace libre de données en duplex intégral entre des correspondants de communication mobile, pouvant être mis en réseau arbitrairement, lesquels présentent respectivement un terminal logé dans un boîtier, qui est muni pour les chemins de signaux d'émission et de réception d'une ouverture de télescope commune et d'un dispositif de réglage d'alignement, et pour lequel la longueur d'onde porteuse du signal d'émission est choisie différemment par rapport à la longueur d'onde porteuse du signal de réception, **caractérisé en ce que** dans le terminal de chaque correspondant de communication pour la porteuse du signal d'émission et celle du signal de réception, deux longueurs d'ondes adjacentes sont fournies au choix et des composants WDM (multiplexage en longueur d'onde) sont prévus, lesquels permettent la transmission simultanée de signaux sur plusieurs longueurs d'ondes porteuses optiques différentes sur une seule et même fibre optique, **en ce que** différentes longueurs d'onde et différents chemins de faisceaux peuvent être sélectionnés au choix pour l'émission et la réception, et la trajectoire de réception dans le terminal de chaque correspondant de communication est commutée inefficacement, c'est-à-dire fictivement, pour la lumière émise par ce terminal au moyen des composants WDM ou une partie de ceux-ci, les longueurs d'ondes d'émission et de réception respectives du terminal concerné étant traitées avant l'enregistrement de la communication de données optiques en espace libre.

2. Système selon la revendication 1, **caractérisé en ce qu'**un faisceau de fibres optiques (FD) est prévu en tant que capteur du dispositif de réglage d'alignement de faisceau, lequel faisceau est formé d'une combinaison d'extrémités de fibres optiques étroitement adjacentes, seule la lumière couplée dans la fibre optique centrale ou les fibres optiques centrales étant utilisée en tant que signal pour la communication de données, et la lumière dans les fibres externes étant utilisée pour l'alignement, la capture et la poursuite de faisceau (PAT ; Pointing, Acquisition and Tracking).

3. Système selon la revendication 2, **caractérisé en ce que** des fibres multimodes sont prévues en tant que fibres optiques.

4. Système selon la revendication 3, **caractérisé en ce que** les fibres multimodes présentent un rapport coeur/gaine le plus important possible.

5. Système selon les revendications 3 ou 4, **caractérisé en ce que** les diamètres de coeur des fibres optiques externes qui servent à l'acquisition, ont des dimensions plus importantes que ceux des fibres internes servant à la transmission de données.

6. Système selon l'une quelconque des revendications 2 à 5, **caractérisé par** une combinaison d'une fibre multimode centrale d'un diamètre de coeur d'environ 100 µm, autour duquel est appliqué un premier anneau de six fibres de poursuite d'un diamètre de coeur par exemple d'environ 100 µm dans un hexagone régulier, autour duquel sont disposés un ou plusieurs autres anneaux de forme hexagonale régulière formés de six fibres d'un diamètre de coeur d'environ 300 µm et plus et d'un diamètre de coeur s'agrandissant vers l'extérieur en tant que détecteur étendu pour l'acquisition.

7. Système selon l'une quelconque des revendications 2 à 6, **caractérisé en ce qu'**une fibre d'émission est intégrée en sus dans la fibre optique centrale et **en ce qu'**un coupleur Y multimode spécial est prévu pour la séparation du signal d'émission et du signal de réception.

8. Système selon l'une quelconque des revendications 2 à 6, **caractérisé en ce qu'**une fibre optique centrale est prévue pour la conduite commune du signal d'émission et du signal de réception, et une optique spéciale à fibres est prévue dans la fibre optique centrale pour la séparation du signal d'émission et du signal de réception, cette optique pouvant être réalisée par un coupleur multimode/monomode respectivement par un coupleur Y multimode/multimode (figure 12), ou par un coupleur rodé spécial DCF multimode respectivement DCF monomode (figure 13).

9. Système selon la revendication 1, **caractérisé en ce que** la combinaison et la séparation des signaux optiques dans la technique de fibres optiques sont assurées non seulement par des coupleurs de fusion de fibres utilisables pour des fibres monomodes mais aussi pour des fibres multimodes et avec des filtres de longueurs d'ondes dans la fibre optique et/ou avec des commutateurs de fibres optiques.

10. Système selon la revendication 1, **caractérisé en ce que** la combinaison et la séparation des signaux optiques dans la technique de fibres optiques sont assurées non seulement par des doubles prismes séparateurs épissés sur les fibres utilisables pour des fibres monomodes mais aussi pour des fibres multimodes et avec des filtres de longueurs d'ondes dans la fibre optique et/ou avec des commutateurs de fibres optiques.

11. Système selon la revendication 1, **caractérisé en ce que** la combinaison et la séparation des signaux optiques dans la technique de faisceau libre sont assurées par des verres filtrants et/ou des doubles prismes séparateurs chromatiques ou neutres.

12. Système selon la revendication 1, **caractérisé en ce qu'**un capteur de position optique sous la forme d'un réseau « APA » (Active Pixel Array) est prévu dans le terminal, ce capteur étant configuré comme un capteur de reproduction optique par exemple sous la forme d'un dispositif à couplage de charge ou d'un réseau CMOS.

13. Système selon la revendication 1, **caractérisé en qu'**un capteur de position optique sous la forme d'un réseau « APA » (Active Pixel Array) est prévu dans le terminal, ce capteur étant configuré comme un capteur à 4 quadrants ou un capteur à 4 quadrants étendu avec champs secondaires plus grands supplémentaires à des fins d'acquisition.

14. Système selon la revendication 1, **caractérisé en qu'**un capteur de position optique sous la forme d'un réseau « APA » (Active Pixel Array) est prévu dans le terminal, ce capteur étant configuré comme un faisceau de fibres optiques correspondant au faisceau de fibres optiques mentionné dans les revendications 2 à 6.

15. Système selon la revendication 1, **caractérisé en ce qu'**une balise est prévue dans le terminal, laquelle balise est réalisable par une ou plusieurs diodes laser balises et produit un signal secondaire optique qui permet et/ou simplifie le réglage d'alignement du terminal du correspondant de communication sur le signal d'émission.

16. Système selon la revendication 15, **caractérisé en ce que** le signal secondaire émis par la balise (BLD) n'est pas modulé par des données, et est détecté par un capteur de position optique formé d'un réseau APA dont le signal de position est converti en un signal de réglage pour un mécanisme d'alignement du terminal.

17. Système selon la revendication 1, **caractérisé en ce qu'**un diviseur de faisceaux, en anglais « Chromatic Beam-Splitter (CBS) » est prévu dans le terminal pour la séparation dépendante des longueurs d'ondes des signaux optiques, lequel diviseur est réalisable soit en tant que version en faisceau libre sous la forme de doubles prismes séparateurs chromatiques soit en tant que composants de fibres.

18. Système selon la revendication 1 ou 15, **caractérisé en ce qu'**un amplificateur optique à fibre (FA) est prévu dans le terminal pour amplifier le signal d'émission et éventuellement le signal secondaire de la balise.

19. Système selon la revendication 18, **caractérisé en ce que** l'amplificateur optique à fibre (FA) est un amplificateur optique à fibre dopée à l'erbium, en abrégé EDFA.

20. Système selon la revendication 18 ou 19, **caractérisé en ce que** l'amplificateur optique à fibre (FA) est à large bande et amplifie plusieurs longueurs d'ondes dans une bande de fréquences.

21. Système selon la revendication 1, **caractérisé en ce que** dans le terminal est prévu un coupleur de fibres (FC) qui réunit les signaux optiques formés de deux ou plusieurs fibres optiques, généralement des fibres monomodes, dans une fibre optique.

22. Système selon la revendication 1, **caractérisé en ce qu'**une unité d'alignement fin (FPA) également désignée « mécanisme de pointage fin » est prévue dans le terminal pour l'alignement côté émission et côté réception du faisceau.

23. Système selon la revendication 22, **caractérisé en ce que** l'unité d'alignement fin (FPA) est conçue comme un système mécanique, par exemple un système de réflecteur à déclenchement piézoélectrique.

24. Système selon la revendication 22, **caractérisé en ce que** l'unité d'alignement fin (FPA) est conçue comme un système non mécanique, sous la forme d'un modulateur spatial de lumière, en abrégé SLM.

25. Système selon l'une quelconque des revendications 22 à 24, **caractérisé en ce que** les unités d'alignement fin côté émission et côté réception (FPA) sont réunies en une unité à la condition qu'aucune installation « Point-Ahead » ne soit prise en compte pour le faisceau d'émission.

26. Système selon la revendication 1, **caractérisé en ce qu'**un ou plusieurs commutateurs (FS) à fibres désignés « Fiber Switch » sont prévus dans le terminal, lesquels sélectionnent une fibre optique parmi différentes fibres optiques conductrices de signaux et la mettent en communication, sous forme de démultiplexage de deux ou plusieurs fibres d'entrée, avec une fibre de sortie.

27. Système selon la revendication 26, **caractérisé en ce qu'**un commutateur (FS) à fibres est prévu dans le terminal côté réception pour bloquer le rayonnement d'émission partiellement rétrodiffusé sensiblement erroné, car individuel.

28. Système selon la revendication 1, **caractérisé en ce qu'**une unité de calcul (PCA) est prévue dans le terminal, laquelle évalue les signaux du capteur (APA) pour l'alignement, la capture et la poursuite de faisceau (PAT ; Pointing, Acquisition, and Tracking) et réalise en conséquence la déviation de faisceau par l'unité d'alignement fin (FPA).

29. Système selon la revendication 1, **caractérisé en ce qu'**un détecteur de puissance (PD) également désigné « Power Detector » est prévu dans le terminal pour mesurer la puissance de réception optique dans la fibre optique respectivement raccordée.

30. Système selon la revendication 1, **caractérisé en ce qu'**un récepteur de données (RXA) également désigné « Receive Assembly » est prévu dans le terminal pour la démodulation du signal optique et pour la récupération des données.

31. Système selon la revendication 1, **caractérisé en ce qu'**une unité d'émission optique (TXA) également désignée « Transmit Assembly » est prévue dans le terminal, laquelle contient une ou plusieurs diodes laser pour produire l'onde porteuse optique, et assure de plus la modulation de l'onde porteuse optique avec le signal de données à transmettre.

32. Système selon la revendication 31, **caractérisé en ce qu'**une diode laser réglable sur plusieurs longueurs d'ondes est prévue dans le terminal pour sélectionner plusieurs longueurs d'ondes au lieu de plusieurs diodes laser.

33. Système selon la revendication 1, **caractérisé en ce qu'**un mécanisme de sécurité actif est prévu dans le terminal pour évaluer les parties rétrodiffusées du signal d'émission, de sorte qu'un obstacle provoquant une forte rétrodiffusion peut être détecté dans la trajectoire de faisceau d'émission à proximité du terminal.

34. Système selon la revendication 33, **caractérisé en ce que** le mécanisme de sécurité actif réduit la puissance d'émission en cas de forte rétrodiffusion.

35. Système selon la revendication 33, **caractérisé en ce que** le mécanisme de sécurité actif est utilisé pour détecter un obstacle, par exemple dans le domaine de la sécurité aérienne.

36. Système selon la revendication 1, **caractérisé en ce qu'**une des deux longueurs d'ondes de signal de données librement sélectionnables est prévue en tant que porteuse de signal d'émission, et une des deux longueurs d'ondes CW librement sélectionnables est prévue en tant que signal de balise dans le terminal optique des correspondants de communication mobile dans la trajectoire d'émission optique avec la source de balise séparée, **en ce que** dans la trajectoire de réception optique du terminal un dispositif de réglage d'alignement à l'aide d'une longueur d'onde de balise séparée, un dispositif de découplage de faisceau libre du signal de balise provenant de la trajectoire de faisceau, un dispositif d'observation du signal de balise sur un capteur (APA) pour l'alignement, la capture et la poursuite de faisceau (PAT ; Pointing, Acquisition, and Tracking) et donc pour générer un signal de poursuite sont prévus, ce capteur étant réalisé soit comme un capteur d'image plan CCD ou CMOS ou comme un capteur à 4 quadrants ou comme un capteur à 4 quadrants avec des segments enveloppants pour l'acquisition, et **en ce que** dans la trajectoire de réception optique du terminal, un dispositif de détection du signal de données est prévu avec un récepteur et un commutateur de fibres en amont ou avec deux récepteurs, le signal de réception à détecter provenant du dispositif de découplage de faisceau libre du signal de balise étant découplé de la trajectoire de faisceau.

37. Système selon la revendication 1, **caractérisé en ce qu'**une des deux longueurs d'ondes de signal de données librement sélectionnables est prévue en tant que porteuse de signal d'émission, et une des deux longueurs d'ondes CW librement sélectionnables est prévue en tant que signal de balise dans le terminal optique des correspondants de communication mobile dans la trajectoire d'émission optique avec la source de balise séparée, **en ce que** dans la trajectoire de réception optique du terminal un dispositif de réglage d'alignement à l'aide d'une longueur d'onde de balise séparée, un dispositif de découplage de faisceau libre du signal de balise provenant de la trajectoire de faisceau et un dispositif de couplage du signal de balise dans un faisceau de fibres multimodes sont prévus, le dispositif de réglage d'alignement étant exécuté par la détection des intensités de signal dans les différentes fibres optiques en bloquant éventuellement la propre longueur d'onde de balise, et **en ce que** dans la trajectoire de réception optique du terminal, un dispositif de détection du signal de données est prévu avec un récepteur et un commutateur de fibres en amont ou avec deux récepteurs, le signal de réception à détecter provenant du dispositif de découplage de faisceau libre du signal de balise étant découplé de la trajectoire de faisceau.

38. Système selon la revendication 1, **caractérisé en ce qu'**une des deux longueurs d'ondes de signal de données librement sélectionnables est prévue en tant que porteuse de signal d'émission, et une longueur d'onde de balise séparée est prévue en tant que signal de balise dans le terminal optique des correspondants de communication mobile dans la trajectoire d'émission optique avec la source de balise séparée, la balise étant pulsée, donc modulée, afin qu'un capteur de poursuite côté réception puisse différencier la balise du propre terminal dans les intervalles d'impulsion de la balise de réception à observer, **en ce que** dans la trajectoire de réception optique du terminal un dispositif de réglage d'alignement à l'aide d'une longueur d'onde de balise séparée, un dispositif de découplage de faisceau libre du signal de balise provenant de la trajectoire de faisceau et un dispositif d'observation du signal de balise sur un capteur (APA) pour l'alignement, la capture et la poursuite de faisceau (PAT ; Pointing, Acquisition, and Tracking), et donc pour générer un signal de poursuite sont prévus, ce capteur étant réalisé soit comme un capteur d'image plan CCD ou CMOS ou comme un capteur à 4 quadrants ou comme un capteur à 4 quadrants avec des segments enveloppants pour l'acquisition, et **en ce que** dans la trajectoire de réception optique du terminal, un dispositif de détection du signal de données est prévu avec un récepteur et un commutateur de fibres en amont ou avec deux récepteurs, le signal de réception à détecter provenant du dispositif de découplage de faisceau libre du signal de balise étant découplé de la trajectoire de faisceau.

39. Système selon la revendication 1, **caractérisé en ce qu'**une des deux longueurs d'ondes de signal de données librement sélectionnables est prévue en tant que porteuse de signal d'émission, et une longueur d'onde de balise séparée est prévue en tant que signal de balise dans le terminal optique des correspondants de communication mobile dans la trajectoire d'émission optique avec la source de balise séparée, la balise étant pulsée, donc modulée, afin qu'un capteur de poursuite côté réception puisse différencier la balise du propre terminal dans les intervalles d'impulsion de la balise de réception à observer, **en ce que** dans la trajectoire de réception optique du terminal un dispositif de réglage d'alignement à l'aide d'une longueur d'onde de balise séparée, un dispositif de découplage de faisceau libre du signal de balise provenant de la trajectoire de faisceau et un dispositif de couplage du signal de balise dans un faisceau de fibres multimodales sont prévus, le dispositif de réglage d'alignement étant exécuté par la détection des intensités de signal dans les différentes fibres optiques en bloquant éventuellement la propre longueur d'onde de balise, et **en ce que** dans la trajectoire de réception optique du terminal, un dispositif de détection du signal de données est prévu avec un récepteur et un commutateur de fibres en amont ou avec deux récepteurs, le signal de réception à détecter provenant du dispositif de découplage de faisceau libre du signal de balise étant découplé de la trajectoire de faisceau.

40. Système selon la revendication 1, **caractérisé en ce qu'**aucune source de balise n'est prévue (sans balise) dans le terminal optique des correspondants de communication mobile dans la trajectoire optique d'émission et une des longueurs d'ondes porteuses de signal d'émission est librement sélectionnable, une amplification du signal d'émission pouvant être réalisée par un amplificateur optique commun, **en ce que** dans la trajectoire de réception optique du terminal un dispositif de réglage d'alignement sans utilisation d'un signal de balise et à cet effet un dispositif de couplage du signal de réception dans un faisceau de fibres en bloquant la lumière parasite indésirable par des découpleurs de fibres chromatiques et un dispositif de réglage d'alignement par la détection des intensités de signal dans les fibres externes du faisceau de fibres éventuellement en bloquant le propre signal d'émission erroné, partiellement rétrodiffusé par des diviseurs de faisceaux de fibres chromatiques sont prévus, et **en ce que** dans la trajectoire de réception optique du terminal, un dispositif de détection du signal de données est prévu avec un récepteur et un commutateur de fibres en amont ou avec deux récepteurs, le signal de réception à détecter provenant du dispositif de couplage du signal de réception dans un faisceau de fibres en bloquant la lumière parasite indésirable par des découpleurs de fibres chromatiques.

41. Système selon la revendication 1, **caractérisé en ce que** la trajectoire d'émission et la trajectoire de réception sont combinées, par le récepteur de faisceaux de fibres avec les fibres d'émission intégrées, dans le terminal optique des correspondants de communication mobile, **en ce qu'**aucune source de balise (sans balise) n'est prévue dans la trajectoire d'émission optique combinée, et une des deux longueurs d'ondes porteuses de signal d'émission est librement sélectionnable, une amplification du signal d'émission pouvant être exécutée par un amplificateur optique commun, **en ce que** dans la trajectoire de réception optique combinée du terminal un dispositif de réglage d'alignement sans utilisation d'un signal de balise et à cet effet un dispositif de couplage du signal de réception dans un faisceau de fibres en bloquant la lumière parasite indésirable par des découpleurs de fibres chromatiques et un dispositif de réglage d'alignement par la détection des intensités de signal dans les fibres externes du faisceau de fibres éventuellement en bloquant le propre signal d'émission erroné, partiellement rétrodiffusé par des diviseurs de faisceaux de fibres chromatiques sont prévus, et **en ce que** dans la trajectoire de réception optique combinée du terminal, un dispositif de détection du signal de données est prévu avec un récepteur et un commutateur de fibres en amont ou avec deux récepteurs, le signal de réception à détecter provenant du dispositif de couplage du signal de réception dans un faisceau de fibres en bloquant la lumière parasite indésirable par des découpleurs de fibres chromatiques.

42. Système selon l'une quelconque des revendications 36 à 41, **caractérisé en ce qu'**une source laser, par exemple diode laser, réglable sur plusieurs longueurs d'ondes est prévue dans la trajectoire d'émission du terminal.

43. Utilisation du système selon l'une quelconque des revendications précédentes pour la communication entre tous types de véhicules aériens, par exemple des avions, HAP, drones et/ou UAV, en particulier entre des avions civils et/ou militaires, et entre tous types de véhicules aériens et satellites de communication ou stations mobiles d'émission/de réception au sol.
